# EUROPEAN PATENT SPECIFICATION

(11) **EP 4 544 794 B1**
(45) Date of publication and mention of the grant of the patent: **01.04.2026**
(21) Application number: 23754001.8
(22) Date of filing: 07.07.2023
(51) Int. Cl.: H04W 76/40, H04L 47/10, H04L 47/80, H04W 28/02, H04W 4/06

(54) **MANAGING MULTICAST SESSION ESTABLISHMENT**
VERWALTUNG DER HERSTELLUNG EINER MULTICAST-SITZUNG
GESTION D'ÉTABLISSEMENT DE SESSION DE MULTIDIFFUSION

(30) Priority: 09.07.2022 US 202263359828 P
(43) Date of publication of application: 30.04.2025
(73) Proprietor: GOOGLE LLC, Mountain View CA 94043 (US)
(72) Inventor: WU, Chih-Hsiang, Mountain View, CA 94043 (US)
(74) Representative: Marks & Clerk GST
(86) International application number: PCT/US2023/027067
(87) International publication number: WO 2024/015254

(56) References cited:
- EP-A1- 4 145 870
- WO-A1-2021/238950
- "3rd Generation Partnership Project; Technical Specification Group Radio Access Network; NG-RAN; Architecture description (Release 17)", vol. RAN WG3, no. V17.0.0, 6 April 2022 (2022-04-06), pages 1 - 115, XP052146518, Retrieved from the Internet <URL:https://ftp.3gpp.org/Specs/archive/38_series/38.401/38401-h00.zip 38401-h00.doc> [retrieved on 20220406]
- SAMSUNG: "Remove the editor's notes related to consent information", vol. RAN WG3, no. E-Meeting; 20220509 - 20220519, 20 May 2022 (2022-05-20), XP052205691, Retrieved from the Internet <URL:https://ftp.3gpp.org/tsg_ran/WG3_Iu/TSGR3_116-e/Docs/R3-224064.zip R3-224064.doc> [retrieved on 20220520]

## Description

### FIELD OF THE DISCLOSURE

This disclosure relates to wireless communications and, more particularly, to enabling one or more multicast and/or broadcast services (MBS).

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Base stations that operate according to fifth-generation (5G) New Radio (NR) requirements support significantly larger bandwidth than fourth-generation (4G) base stations. Accordingly, the Third Generation Partnership Project (3GPP) has proposed that, for Release 15, user equipment units (UEs) support a 100 MHz bandwidth in frequency range 1 (FR1) and a 400 MHz bandwidth in frequency range 2 (FR2). The 5G NR system enables resource efficient delivery of multicast/broadcast services (MBS). For broadcast communication services, the same service and the same specific content data are provided simultaneously to all UEs in a geographical area (i.e., all UEs in the broadcast service area are authorized to receive the data). A base station delivers broadcast communication service to the UEs using a broadcast session. A UE can receive a broadcast communication service in RRC_IDLE, RRC_INACTIVE and RRC_CONNECTED state.

For multicast communication service, the same service and the same specific content data are provided simultaneously to a dedicated set of UEs (i.e., not all UEs in the multicast service area are authorized to receive the data). A multicast communication service is delivered to the UEs using a multicast session. 5G NR provides both point-to-point (PTP) and point-to-multipoint (PTM) delivery methods for the transmission of MBS packet flows over the radio interface. In PTP communications, a RAN node transmits different copies of each MBS data packet to different UEs over the radio interface. On the other hand, in PTM communications, a RAN node transmits a single copy of each MBS data packet to multiple UEs over the radio interface according to a discontinuous reception (DRX) cycle.

5G NR provides both point-to-point (PTP) and point-to-multipoint (PTM) delivery methods for the transmission of MBS packet flows over the radio interface. In PTP communications, a RAN node transmits different copies of each MBS data packet to different UEs over the radio interface. On the other hand, in PTM communications, a RAN node transmits a single copy of each MBS data packet to multiple UEs over the radio interface. A multicast MBS session context establishment procedure is defined in 3GPP specification 38.401 v17.0.0, and was recently updated according to document R3-224064. Although these documents require that the core network (CN) send an NGAP message to a base station to trigger establishment of a multicast session context, it is unclear which NGAP message the CN should utilize in this case. Moreover, none of the existing message the CN can transmit in this scenario convey information sufficient for the base station to properly configure the MBS session. WO 2021/238950 Al provides a communication method and a communication apparatus. The communication method comprises: for a radio bearer carrying a multicast service, establishing a downlink user plane tunnel between a first access network node and a second access network node, and transmitting a data packet of the multicast service by means of the downlink user plane tunnel. Thus, a multicast service can be transmitted under a CU/DU architecture. In addition, a unicast tunnel can also be established to transmit a data packet, sent in a unicast mode, of the multicast service. In this way, the first access network node can transmit, in a unicast tunnel, a data packet of a multicast service to the second access network node in a unicast mode.

### SUMMARY

The invention is defined by the independent claims that accompany this disclosure. Any examples and embodiments of the description not falling within the scope of the claims do not form part of the invention as defined by the independent claims.

A base station of this disclosure receives from a core network, or retrieves from a memory according to a prior configuration, MBS quality of service (QoS) flow configurations prior to the time when the CU must configure a DU with the MBS QoS flow configuration(s). In this manner, the CU ensures that the DU can configure MBS QoS flows properly. In various implementations, the CU receives this information from the CN in a multicast session activation request, a multicast session update request, or a distribution setup response received prior to the CU requesting a multicast context setup from the DU.

An example embodiment of these techniques a method in a central unit (CU) of a distributed base station for multicast session establishment, comprising: obtaining, by one or more processors at a first time during a procedure for establishing a context for a multicast session, one or more multicast and broadcast services (MBS) quality of service (QoS) flow configurations; and transmitting, by the one or more processors to a distributed unit (DU) of the distributed base station, the one or more MBS QoS flow configurations, at a second time subsequent to the first time, during the procedure for establishing the context for a multicast session.

Another example embodiment of these techniques is a CU of a distributed base station, the CU comprising one or more processors and configured to implement the method above.

Yet another example embodiment of these techniques is a method in a core network (CN) for multicast session establishment, the method comprising: transmitting, by one or more processors to a base station, a multicast session activation or update request including one or more multicast and broadcast services (MBS) quality of service (QoS) flow configurations; and receive, by the one or more processors from the base station, a response to the multicast session activation or update request.

Another example embodiment of these techniques is a core network comprising one or more computing devices and configured to implement the method above.

### BRIEF DESCRIPTION OF THE DRAWINGS

Fig. 1A is a block diagram of an example system in which the techniques of this disclosure for managing MBS session activation may be implemented;
Fig. 1B is a block diagram of an example base station in which a centralized unit (CU) and a distributed unit (DU) can operate in the system of Fig. 1A;
Fig. 2A is a block diagram of an example protocol stack according to which the UE of Fig. 1A can communicate with base stations of Fig. 1A;
Fig. 2B is a block diagram of an example protocol stack according to which the UE of Fig. 1A can communicate with a DU and a CU of a base station;
Fig. 3 is a block diagram of an example tunnel architectures for MBS sessions and PDU sessions;
Fig. 4 is a block diagram of an example tunnel architectures for MRBs and DRBs;
Fig. 5A is a messaging diagram of an example scenario in which a distributed base station of Fig. 1A and/or 1B receives one or more MBS QoS flow configurations from a CN in a multicast session activation request message, and proceeds to establish a context for a multicast MBS session;
Fig. 5B is a messaging diagram of an example scenario similar to the scenario of Fig. 5A, but in which the CU retrieves QoS flow configuration(s) from a local memory;
Fig. 5C is a messaging diagram of an example scenario similar to the scenario of Fig. 5A, but in which the CU receives a distribution setup response with the one or more MBS QoS flow configurations;
Fig. 5D is a messaging diagram of an example scenario similar to the scenario of Fig. 5A, but in which the CU receives a multicast session update request message rather than the multicast session activation request message;
Fig. 5E is a messaging diagram of an example scenario similar to those of Figs. 6A-D, but including UE-specific CN-to-CU messaging;
Fig. 6 is a flow diagram of an example method for multicast session establishment, which can be implemented in a CN of this disclosure;
Fig. 7 is a flow diagram of an example method for multicast session establishment similar to that of Fig. 6A, but involving an update request rather than an activation request;
Fig. 8A is a flow diagram of an example method for establishing a context for a multicast MBS session, with MBS QoS flow configurations arriving in a multicast session activation request message, which can be implemented in a base station of this disclosure;
Fig. 8B is a flow diagram of an example method similar to that of Fig. 8A, but with the CU retrieving QoS flow configuration(s) from a local memory;
Fig. 8C is a flow diagram of an example method similar to that of Fig. 8A, but with the CU receiving a distribution setup response with MBS QoS flow configurations, prior to setting up a multicast context with a DU;
Fig. 8D is a flow diagram of an example method similar to that of Fig. 8A, but with MBS QoS flow configuration(s) arriving in a multicast session update request message;
Fig. 8E is a flow diagram of an example method similar to that of Fig. 8A, but with the CU receiving QoS flow configuration(s) in a message associated with a particular UE;
Fig. 9A is a flow diagram of an example method for establishing a context for a multicast MBS session, in which a CU determines whether to rely on a pre-stored MBS QoS flow configuration(s) based on whether the CN has provided MBS QoS flow configuration(s) in a message to the CU; and
Fig. 9B is a flow diagram of an example method similar to that of Fig. 9A, but in which a CU determines whether to exclude mandatory information elements (IEs) from a CU-to-DU message based on whether the CN has provided MBS QoS flow configuration(s) in a message to the CU.

### DETAILED DESCRIPTION OF THE DRAWINGS

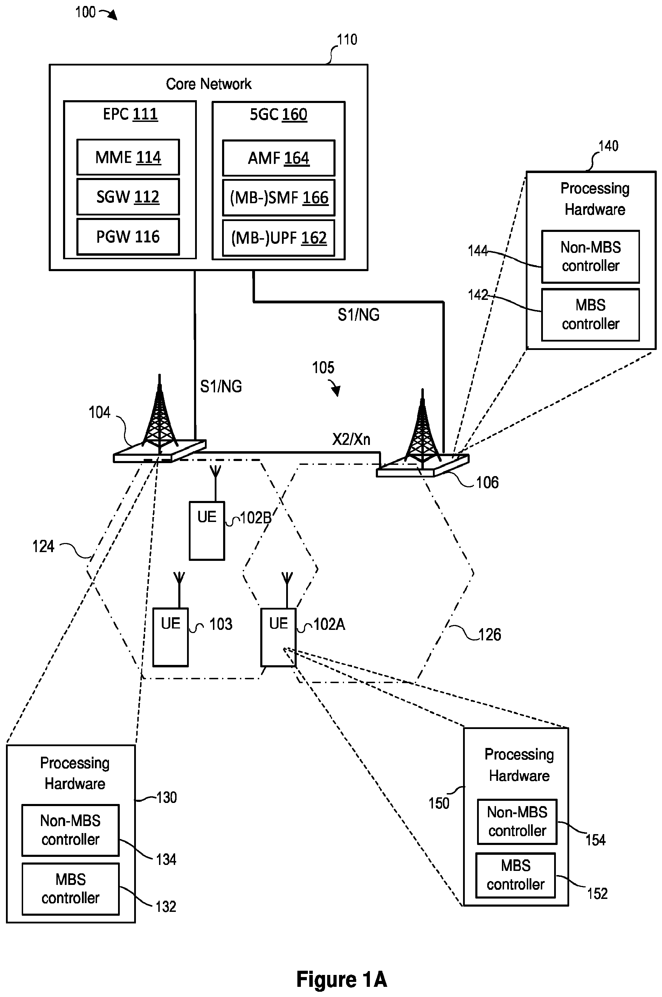

Fig. 1A depicts an example wireless communication system 100 capable of implementing techniques of this disclosure for managing transmission and reception of multicast and/or broadcast services (MBS) information. The wireless communication system 100 includes user equipment (UEs) 102A, 102B, and 103 as well as base stations 104, 106 of a radio access network (RAN) 105 connected to a core network (CN) 110. In other implementations or scenarios, the wireless communication system 100 includes more or fewer UEs, and/or more or fewer base stations, than are shown in Fig. 1A. The base stations 104, 106 can be of any suitable type, or types, of base stations, such as an evolved node B (eNB), a next-generation eNB (ng-eNB), or a 5G Node B (gNB), for example.

The base station 104 supports a cell 124, and the base station 106 supports a cell 126. The cell 124 partially overlaps with the cell 126, so that the UE 102A can be in range to communicate with base station 104 while simultaneously being in range to communicate with the base station 106 (or in range to detect or measure signals from the base station 106). The overlap can make it possible for the UE 102A to hand over between the cells *(e.g.,* from the cell 124 to the cell 126) or base stations (*e.g*., from the base station 104 to the base station 106) before the UE 102A experiences radio link failure, for example. Moreover, the overlap allows various dual connectivity (DC) scenarios. For example, the UE 102A can communicate in DC with the base station 104 (operating as a master node (MN)) and the base station 106 (operating as a secondary node (SN)).

In non-MBS (unicast) operation, the UE 102A can use a radio bearer *(e.g.,* a DRB or an SRB) that, at different times, terminates at an MN *(e.g.,* the base station 104) or an SN *(e.g.,* the base station 106). For example, after handover or SN change to the base station 106, the UE 102A can use a radio bearer *(e.g.,* a DRB or an SRB) that terminates at the base station 106. The UE 102A can apply one or more security keys when communicating on the radio bearer, in the uplink (from the UE 102A to a base station) and/or downlink (from a base station to the UE 102A) direction. In non-MBS operation, the UE 102A transmits data via the radio bearer on *(i.e.,* within) an uplink (UL) bandwidth part (BWP) of a cell to the base station, and/or receives data via the radio bearer on a downlink (DL) BWP of the cell from the base station. The UE 102A can receive paging, system information, public warning message(s), or a random access response on the DL BWP.

In MBS operation, the UE 102A can use an MBS radio bearer (MRB) that, at different times, terminates at an MN *(e.g.,* the base station 104) or an SN *(e.g.,* the base station 106). For example, after handover or SN change, the UE 102A can use an MRB that terminates at the base station 106, which operates as an MN or SN. In some scenarios, a base station *(e.g.,* the MN or SN) can transmit MBS data over unicast radio resources *(i.e.,* the radio resources dedicated to the UE 102A) to the UE 102A via the MRB. In other scenarios, the base station *(e.g.,* the MN or SN) can transmit MBS data over multicast radio resources *(i.e.,* the radio resources common to the UE 102A and one or more other UEs), or a DL BWP of a cell from the base station to the UE 102A, via the MRB. The DL BWP can be an initial DL BWP, a dedicated DL BWP, or an MBS DL BWP *(i.e.,* a DL BWP that is specific to MBS, or not for unicast).

The base station 104 includes processing hardware 130, which can include one or more general-purpose processors (*e.g*., central processing units (CPUs)) and a computer-readable memory storing machine-readable instructions executable on the one or more general-purpose processor(s), and/or special-purpose processing units. The processing hardware 130 in the example implementation of Fig. 1A includes an MBS controller 132 that is configured to manage or control transmission of MBS information received from the CN 110 or an edge server. For example, the MBS controller 132 can be configured to support radio resource control (RRC) configurations, procedures, and messaging associated with MBS procedures, and/or other operations associated with those configurations and/or procedures, including a HARQ process, as discussed below. In some implementations, the processing hardware 130 also includes a non-MBS controller 134 that is configured to manage or control one or more RRC configurations and/or RRC procedures when the base station 104 operates as an MN or SN during a non-MBS operation.

The base station 106 includes processing hardware 140, which can include one or more general-purpose processors (*e.g*., CPUs) and a computer-readable memory storing machine-readable instructions executable on the general-purpose processor(s), and/or special-purpose processing units. The processing hardware 140 in the example implementation of Fig. 1A includes an MBS controller 142 and a non-MBS controller 144, which may be similar to the controllers 132 and 134, respectively, of base station 130. Although not shown in Fig. 1A, the RAN 105 can include additional base stations with processing hardware similar to the processing hardware 130 of the base station 104 and/or the processing hardware 140 of the base station 106.

The UE 102A includes processing hardware 150, which, in some implementations, includes one or more general-purpose processors (*e.g*., CPUs) and a computer-readable memory storing machine-readable instructions executable on the general-purpose processor(s), and/or special-purpose processing units. The processing hardware 150 in the example implementation of Fig. 1A includes an MBS controller 152 that is configured to manage or control reception of MBS information. For example, the UE MBS controller 152 can be configured to support RRC configurations, procedures, and messaging associated with MBS procedures, and/or other operations associated with those configurations and/or procedures, including a HARQ process, as discussed below. The processing hardware 150 in further implementations also includes a non-MBS controller 154 configured to manage or control one or more RRC configurations and/or RRC procedures in accordance with any of the implementations discussed below, when the UE 102A communicates with an MN and/or an SN during a non-MBS operation. Although not shown in Fig. 1A, in further implementations, UEs 102B and 103 include processing hardware similar to the processing hardware 150 of the UE 102A.

In some implementations, the CN 110 is an evolved packet core (EPC) 111 or a fifth-generation core (5GC) 160, both of which are depicted in Fig. 1A. Depending on the implementation, the base station 104 is an eNB supporting an S1 interface for communicating with the EPC 111, an ng-eNB supporting an NG interface for communicating with the 5GC 160, or a gNB that supports an NR radio interface as well as an NG interface for communicating with the 5GC 160. In further implementations, the base station 106 is an EUTRA-NR DC (EN-DC) gNB (en-gNB) with an S1 interface to the EPC 111, an en-gNB that does not connect to the EPC 111, a gNB that supports the NR radio interface and an NG interface to the 5GC 160, or an ng-eNB that supports an EUTRA radio interface and an NG interface to the 5GC 160. In some implementations, to directly exchange messages with each other during the scenarios discussed below, the base stations 104 and 106 support an X2 or Xn interface.

Among other components, the EPC 111 can include a serving gateway (SGW) 112, a mobility management entity (MME) 114, and a packet data network gateway (PGW) 116. The SGW 112 is generally configured to transfer user-plane packets related to audio calls, video calls, Internet traffic, etc., and the MME 114 is configured to manage authentication, registration, paging, and other related functions. The PGW 116 provides connectivity from a UE *(e.g.,* UE 102A or 102B) to one or more external packet data networks, *e.g.*, an Internet network and/or an Internet Protocol (IP) Multimedia Subsystem (IMS) network. The 5GC 160 includes a user plane function (UPF) 162 and an access and mobility management (AMF) 164, and/or a session management function (SMF) 166. The UPF 162 is generally configured to transfer user-plane packets related to audio calls, video calls, Internet traffic, etc., the AMF 164 is generally configured to manage authentication, registration, paging, and other related functions, and the SMF 166 is generally configured to manage PDU sessions.

The UPF 162, AMF 164, and/or SMF 166 can be configured to support MBS. For example, the SMF 166 can be configured to manage or control MBS transport, configure the UPF 162 and/or RAN 105 for MBS flows, and/or manage or configure one or more MBS sessions or PDU sessions for MBS for a UE *(e.g.,* UE 102A or 102B). The UPF 162 is configured to transfer MBS data packets to audio, video, Internet traffic, etc. to the RAN 105. The UPF 162 and/or SMF 166 can be configured for both non-MBS unicast service and MBS, or for MBS only.

Generally, in some implementations, the wireless communication system 100 includes any suitable number of base stations supporting NR cells and/or EUTRA cells. More particularly, in further implementations, the EPC 111 or the 5GC 160 connect to any suitable number of base stations supporting NR cells and/or EUTRA cells. Although the examples below refer specifically to specific CN types (EPC, 5GC) and RAT types (5G NR and EUTRA), in general the techniques of this disclosure can also apply to other suitable radio access and/or core network technologies, such as sixth generation (6G) radio access and/or 6G core network or 5G NR-6G DC, for example.

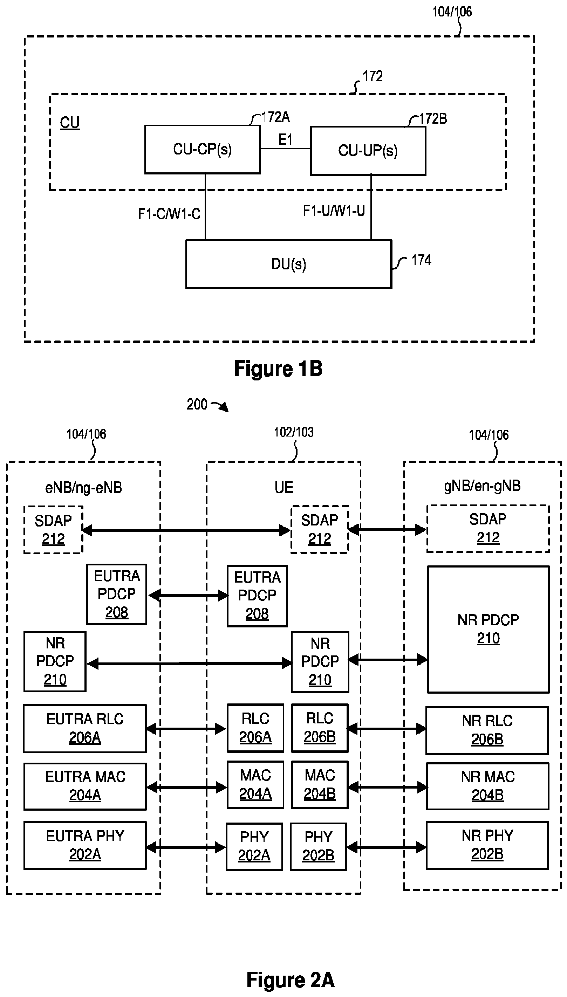

Fig. 1B depicts an example distributed implementation of any one or more of the base stations 104 and 106. In this implementation, the base station 104 or 106 includes a central unit (CU) 172 and one or more distributed units (DUs) 174. The CU 172 includes processing hardware, such as one or more general-purpose processors (*e.g.*, CPUs) and a computer-readable memory storing machine-readable instructions executable on the general-purpose processor(s), and/or special-purpose processing units. For example, the CU 172 can include some or all of the processing hardware 130 or 140 of Fig. 1A.

Each of the DUs 174 also includes processing hardware that can include one or more general-purpose processors (*e.g*., CPUs) and computer-readable memory storing machine-readable instructions executable on the one or more general-purpose processors, and/or special-purpose processing units. For example, the processing hardware can include a medium access control (MAC) controller configured to manage or control one or more MAC operations or procedures (*e.g*., a random access procedure), and a radio link control (RLC) controller configured to manage or control one or more RLC operations or procedures when the base station (*e.g.*, base station 104) operates as an MN or an SN. The processing hardware can also include a physical (PHY) layer controller configured to manage or control one or more PHY layer operations or procedures.

In some implementations, the CU 172 can include one or more logical nodes (CU-CP(s) 172A) that host the control plane part of the Packet Data Convergence Protocol (PDCP) protocol of the CU 172 and/or the radio resource control (RRC) protocol of the CU 172. The CU 172 can also include one or more logical nodes (CU-UP(s) 172B) that host the user plane part of the PDCP protocol and/or service data adaptation protocol (SDAP) protocol of the CU 172. The CU-CP(s) 172A can transmit non-MBS control information and MBS control information, and the CU-UP(s) 172B can transmit non-MBS data packets and MBS data packets, as described herein.

The CU-CP(s) 172A can be connected to multiple CU-UPs 172B through the E1 interface. The CU-CP(s) 172A select the appropriate CU-UP(s) 172B for the requested services for the UE 102A. In some implementations, a single CU-UP 172B can be connected to multiple CU-CPs 172A through the E1 interface. A CU-CP 172A can be connected to one or more DUs 174s through an F1-C interface. A CU-UP 172B can be connected to one or more DUs 174 through an F1-U interface under the control of the same CU-CP 172A. In some implementations, one DU 174 can be connected to multiple CU-UPs 172B under the control of the same CU-CP 172A. In such implementations, the connectivity between a CU-UP 172B and a DU 174 is established by the CU-CP 172A using bearer context management functions.

Fig. 2A illustrates, in a simplified manner, an example protocol stack 200 according to which a UE *(e.g.,* UE 102A, 102B, or 103) can communicate with an eNB/ng-eNB or a gNB *(e.g.,* one or more of the base stations 104, 106). In the example protocol stack 200, a PHY sublayer 202A of EUTRA provides transport channels to an EUTRA MAC sublayer 204A, which in turn provides logical channels to an EUTRA RLC sublayer 206A. The EUTRA RLC sublayer 206A in turn provides RLC channels to an EUTRA PDCP sublayer 208 and, in some cases, to an NR PDCP sublayer 210. Similarly, an NR PHY 202B provides transport channels to an NR MAC sublayer 204B, which in turn provides logical channels to an NR RLC sublayer 206B. The NR RLC sublayer 206B in turn provides RLC channels to an NR PDCP sublayer 210. The UE 102A, in some implementations, supports both the EUTRA and the NR stack as shown in Fig. 2A, to support handover between EUTRA and NR base stations and/or to support DC over EUTRA and NR interfaces. Further, as illustrated in Fig. 2A, the UE 102A can support layering of NR PDCP 210 over EUTRA RLC 206A, and an SDAP sublayer 212 over the NR PDCP sublayer 210. Sublayers are also referred to herein as simply "layers."

The EUTRA PDCP sublayer 208 and the NR PDCP sublayer 210 receive packets (*e.g.,* from an IP layer, layered directly or indirectly over the PDCP layer 208 or 210) that can be referred to as service data units (SDUs), and output packets *(e.g.,* to the RLC layer 206A or 206B) that can be referred to as protocol data units (PDUs). Except where the difference between SDUs and PDUs is relevant, this disclosure for simplicity refers to both SDUs and PDUs as "packets." The packets can be MBS packets or non-MBS packets. MBS packets may include application content for an MBS service (*e.g*., IPv4/IPv6 multicast delivery, IPTV, software delivery over wireless, group communications, IoT applications, V2X applications, and/or emergency messages related to public safety), for example. As another example, MBS packets may include application control information for the MBS service.

On a control plane, the EUTRA PDCP sublayer 208 and the NR PDCP sublayer 210 can provide SRBs to exchange RRC messages or non-access-stratum (NAS) messages, for example. On a user plane, the EUTRA PDCP sublayer 208 and the NR PDCP sublayer 210 can provide DRBs to support data exchange. Data exchanged on the NR PDCP sublayer 210 may be SDAP PDUs, IP packets, or Ethernet packets, for example.

In some implementations, a base station (*e.g*., base station 104, 106) broadcasts MBS data packets via one or more MBS radio bearers (MRB(s)), and in turn the UE 102A, 102B, or 103 receives the MBS data packets via the MRB(s). The base station can include configuration(s) of the MRB(s) in multicast configuration parameters (which can also be referred to as MBS configuration parameters) described below. In some implementations, the base station broadcasts the MBS data packets via RLC sublayer 206, MAC sublayer 204, and PHY sublayer 202, and correspondingly, the UE 102A uses PHY sublayer 202, MAC sublayer 204, and RLC sublayer 206 to receive the MBS data packets. In some such implementations, the base station and the UE 102A, 102B, or 103 do not use a PDCP sublayer 208 and an SDAP sublayer 212 to communicate the MBS data packets. In other implementations, the base station transmits the MBS data packets via PDCP sublayer 208, RLC sublayer 206, MAC sublayer 204, and PHY sublayer 202, and correspondingly, the UE 102A, 102B, or 103 uses PHY sublayer 202, MAC sublayer 204, RLC sublayer 206, and PDCP sublayer 208 to receive the MBS data packets. In some such implementations, the base station and the UE 102A, 102B, or 103 do not use an SDAP sublayer 212 to communicate the MBS data packets. In yet other implementations, the base station transmits the MBS data packets via the SDAP sublayer 212, PDCP sublayer 208, RLC sublayer 206, MAC sublayer 204, and PHY sublayer 202 and, correspondingly, the UE 102A, 102B, or 103 uses the PHY sublayer 202, MAC sublayer 204, RLC sublayer 206, PDCP sublayer 208, and SDAP sublayer 212 to receive the MBS data packets.

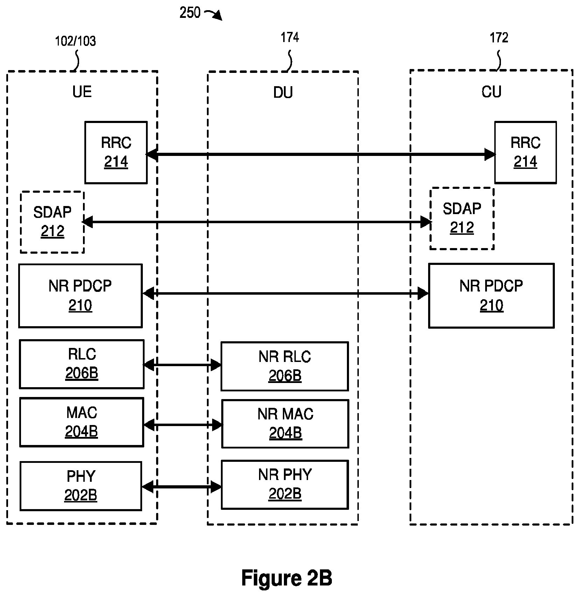

Fig. 2B illustrates, in a simplified manner, an example protocol stack 250 that the UE 102A, 102B, or 103 can use to communicate with a DU *(e.g.,* DU 174) and a CU *(e.g.,* CU 172). The radio protocol stack 200 of Fig. 2A is functionally split as shown by the radio protocol stack 250 in Fig. 2B. The CU at any of the base stations 104 or 106 can hold all the control and upper layer functionalities (*e.g*., RRC 214, SDAP 212, NR PDCP 210), while the lower layer operations (*e.g*., NR RLC 206B, NR MAC 204B, and NR PHY 202B) can be delegated to the DU. To support connection to a 5GC, NR PDCP 210 provides DRBs to SDAP 212 and SRBs to RRC 214.

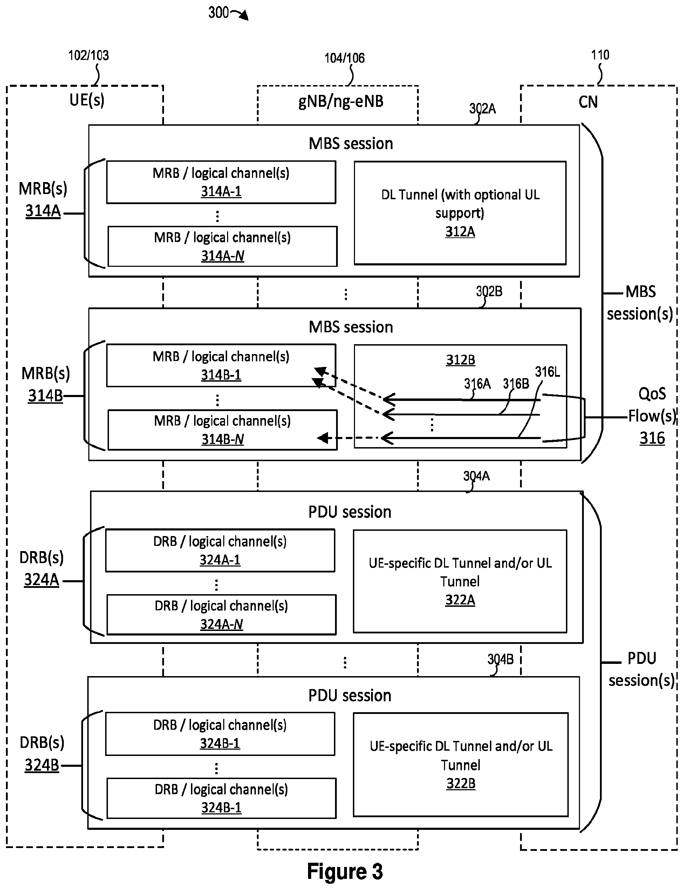

Referring to Fig. 3, an MBS session 302A can include a tunnel 312A with endpoints at the CN 110 and the base station 104/106. The MBS session 302A can correspond to a certain session ID such as a Temporary Mobile Group Identity (TMGI), for example. The MBS data can include IP packets, TCP/IP packets, UDP/IP packets, Real-Time Transport Protocol (RTP)/UDP/IP packets, or RTP/TCP/IP packets, for example.

In some cases, the CN 110 and/or the base station 104/106 configure the tunnel 312A only for MBS traffic directed from the CN 110 to the base station 104/106, and the tunnel 312A can be referred to as a downlink (DL) tunnel. In other cases, however, CN 110 and the base station 104/106 use the tunnel 312A for downlink and also for uplink (UL) MBS traffic to support, for example, commands or service requests from the UEs. Further, because the base station 104/106 can direct MBS traffic arriving via the tunnel 312A to multiple UEs, the tunnel 312A can be referred to as a common tunnel or a common DL tunnel.

The tunnel 312A can operate at the transport layer or sublayer, *e.g.*, on the User Datagram Protocol (UDP) protocol layered over Internet Protocol (IP). As a more specific example, the tunnel 312A can be associated with the General Packet Radio System (GPRS) Tunneling Protocol (GTP). The tunnel 312A can correspond to a certain IP address (*e.g*., an IP address of the base station 104/106) and a certain Tunnel Endpoint Identifier (TEID) (*e.g.,* assigned by the base station 104/106), for example. More generally, the tunnel 312A can have any suitable transport-layer configuration. The CN 110 can specify the IP address and the TEID address in header(s) of a tunnel packet including an MBS data packet, and transmit the tunnel packet downstream to the base station 104/106 via the tunnel 312A *(i.e.,* the header(s) can include the IP address and/or the TEID). For example, the header(s) can include an IP header and a GTP header including the IP address and the TEID, respectively. The base station 104/106 accordingly can identify data packets traveling via the tunnel 312A using the IP address and/or the TEID.

As illustrated in Fig. 3, the base station 104/106 maps traffic in the tunnel 312A to *N* radio bearers 314A-1, 314A-2, ... 314A-*N*, which may be configured as MBS radio bearers or MRBs, where *N* ≥ 1. Each MRB can correspond to a respective logical channel. As discussed above, the PDCP sublayer provides support for radio bearers such as SRBs, DRBs, and MRBs, and a EUTRA or NR MAC sublayer provides logical channels to a EUTRA or NR RLC sublayer. Each of the MRBs 314A for example can correspond to a respective MBS Traffic Channel (MTCH). The base station 104/106 and the CN 110 can also maintain another MBS session 302B, which similarly can include a tunnel 312B corresponding to MRBs 314B-1, 314B-2, ... 314B-*N*, where *N* ≥ 1. Each of the MRBs 314B can correspond to a respective logical channel.

The MBS traffic can include one or multiple quality-of-service (QoS) flows, for each of the tunnels 312A, 312B, etc. For example, the MBS traffic on the tunnel 312B can include a set of flows 316 including QoS flows 316A, 316B, ... 316*L*. Further, a logical channel of an MRB can support a single QoS flow or multiple QoS flows. In the example configuration of Fig. 3, the base station 104/106 maps the QoS flows 316A and 316B to the MTCH of the MRB 314B-1, and the QoS flow 316*L* to the MTCH of the MRB 314B-*N*.

In various scenarios, the CN 110 can assign different types of MBS traffic to different QoS flows. A flow with a relatively high QoS value can correspond to audio packets, and a flow with a relatively low QoS value can correspond to video packets, for example. As another example, a flow with a relatively high QoS value can correspond to I-frames or complete images used in video compression, and a flow with a relatively low QoS value can correspond to P-frames or predicted pictures that include only changes to I-frames.

With continued reference to Fig. 3, the base station 104/106 and the CN 110 can maintain one or more PDU sessions to support unicast traffic between the CN 110 and particular UEs. A PDU session 304A can include a UE-specific DL tunnel and/or UE-specific UL tunnel 322A corresponding to one or more DRBs 324A, such as a DRB 324A-1, 324A-2, ... 324A-*N*. Each of the DRBs 324A can correspond to a respective logical channel, such as a Dedicated Traffic Channel (DTCH).

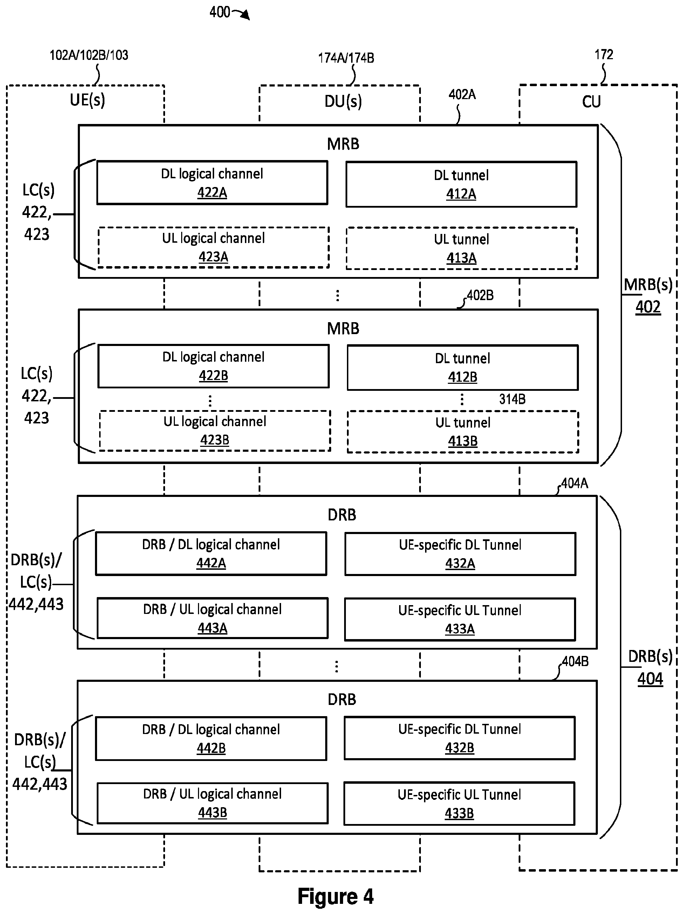

Now referring to Fig. 4, when the base station 104/106 is implemented in a distributed manner, the CU 172 and the DU 174A/174B can establish tunnels for downlink data and/or uplink data associated with an MRB or a DRB. The MRB 314A-1 discussed above can be implemented as an MRB 402A connecting the CU 172 to multiple UEs such as the UE 102A and 102B, for example. The MRB 402A can include a DL tunnel 412A connecting the CU 172 and the DU 174A/174B, and a DL logical channel 422A corresponding to the DL tunnel 412A. In particular, the DU 174A/174B can map downlink traffic received via the DL tunnel 412A to the DL logical channel 422A, which can be an MTCH or a DTCH, for example. The DL tunnel 412A can be a common DL tunnel via which the CU 172 transmits MBS data packets to multiple UEs. Alternatively, the DL tunnel 412A can be a UE-specific DL tunnel via which the CU 172 transmits MBS data packets to a particular UE.

Optionally, the MRB 402A also includes a UL tunnel 413A connecting the CU 172 and the DU 174A/174B, and a UL logical channel 423A corresponding to the UL tunnel 413A. The UL logical channel 423A can be a DTCH, for example. The DU 174A/174B can map uplink traffic received via the UL logical channel 423A to the UL tunnel 413A.

The tunnels 412A and 413A can operate at the transport layer or sublayer of the F1-U interface. As a more specific example, the CU 172 and the DU 174A/174B can utilize an F1-U for user-plane traffic, and the tunnels 412A and 413A can be associated with the GTP-U protocol layered over UDP/IP, where IP is layered over suitable data link and physical (PHY) layers. Further, the MRB(s) 402 and/or the DRB(s) 404 in at least some of the cases additionally support control-plane traffic. More particularly, the CU 172 and the DU 174A/174B can exchange F1-AP messages over an F1-C interface that relies on a Stream Control Transmission Protocol (SCTP) layered over IP, where IP is layered over suitable data link and PHY layers similar to F1-U.

Similarly, an MRB 402B can include a DL tunnel 412B and, optionally, an UL tunnel 413B. The DL tunnel 412B can correspond to a DL logical channel 422B, and the UL tunnel 413B can correspond to the UL logical channel 423B.

The CU 172 in some cases uses a DRB 404A to transmit MBS data packets or unicast data packets associated with a PDU session, to a particular UE *(e.g.,* the UE 102A or the UE 102B). The DRB 404A can include a UE-specific DL tunnel 432A connecting the CU 172 and the DU 174A/174B, and a DL logical channel 442A corresponding to the DL tunnel 432A. In particular, the DU 174A/174B can map downlink traffic received via the DL tunnel 432A to the DL logical channel 442A, which can be a DTCH, for example. The DRB 404A further includes a UE-specific UL tunnel 433A connecting the CU 172 and the DU 174A/174B, and a UL logical channel 443A corresponding to the UL tunnel 433A. The UL logical channel 443A can be a PUSCH, for example. The DU 174A/174B can map uplink traffic received via the UL logical channel 443A to the UL tunnel 433A.

Similarly, a DRB 404B can include a UE-specific DL tunnel 432B corresponding to a DL logical channel 442B, and a UE-specific UL tunnel 433B corresponding to a UL logical channel 443B.

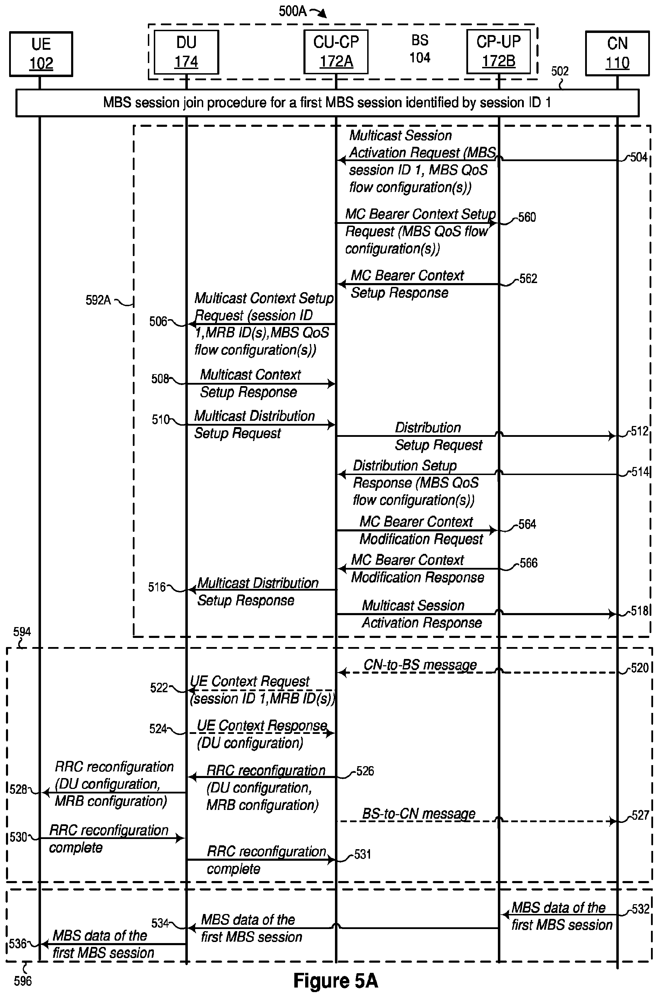

Next, several scenarios in which a distributed base station facilitates establishment of a multicast session, and provides MBS QoS flow configuration(s) from a CU to a DU prior to setting up a multicast context at the DU, are discussed with reference to Figs. 5A-E. Although the scenarios of Figs. 5A-Einvolve MBS QoS flow configuration(s), the techniques the network devices implement also can apply to network slices, as explained below.

Referring first to Fig. 5A, in an example scenario 500A of establishing a MBS session, the base station 104 includes a DU 174, CU-CP 172A and CU-UP 172B. The scenario 500A can also apply to an integrated CU, in which a CP and UP function nodes have no logical separation.

The UE 102 *(e.g.,* UE 102A of Fig. 1A) initially performs 502 an MBS session join procedure with the CN 110 via the base station 104 to join a first MBS session. In some implementations, the MBS session join procedure may not involve the CU-CP 172B. In some scenarios, the UE 102 subsequently performs an additional one or more MBS join procedures, and event 502 accordingly is a first one of multiple MBS join procedures. Because the base station 104 configures a common DL tunnel for MBS traffic (rather than a UE-specific tunnel as discussed below), the procedures 502 and 592A can occur in either order. In other words, the base station 104 can configure a common DL tunnel before even a single UE joins the first MBS session.

To perform the MBS session join procedure, the UE 102 in some implementations sends an MBS session join request message to the CN 110 via the base station 104. In response, the CN 110 can send an MBS session join response message to the UE 102 via the base station 104 to grant the UE 102 access to the first MBS session. In some implementations, the UE 102 can include a first MBS session ID (e.g., MBS Session ID 1) for the first MBS session in the MBS session join request message. The CN 110 in some cases includes the first MBS session ID in the MBS session join response message. In some implementations, the UE 102 can send an MBS session join complete message to the CN 110 via the base station 104 in response to the MBS session join response message.

In some implementations, the MBS session join request message, MBS session join response message, and MBS session join complete message can be session initiation protocol (SIP) messages. In other implementations, the MBS session join request message, MBS session join response message, and MBS session join complete message can be NAS messages such as 5G mobility management (5GMM) messages or 5G session management messages (5GSM). In the case of the 5GSM messages, the UE 102 can transmit to the CN 110 via the base station 104 a (first) UL container message including the MBS session join request message, the CN 110 can transmit to the UE 102 via the base station 104 a DL container message including the MBS session join response message, and the UE 102 can transmit to the CN 110 via the base station 104 a (second) UL container message including the MBS session join complete message. These container messages can be 5GMM messages. In some implementations, the MBS session join request message, MBS session join response message, and MBS session join complete message can be a *PDU Session Modification Request* message, a *PDU Session Modification Command* message, and a *PDU Session Modification Complete* message, respectively. To simplify the following description, the terms MBS session join request message, MBS session join response message, and/or MBS session join complete message can represent either the respective container messages, or the respective messages without containers.

In some implementations, the UE 102 can perform a PDU session establishment procedure with the CN 110 via the base station 104 to establish a PDU session in order to perform the (first) MBS session join procedure. During the PDU session establishment procedure, the UE 102 can communicate a PDU session ID of the PDU session with the CN 110 via the base station 104.

Before, during, or after the first MBS session join procedure (event 502), the CN 110 can send 504 a first CN-to-BS message (e.g., *Multicast Session Activation Request* message) including the first MBS session ID to the CU-CP 172A to request the CU-CP 172A to configure or activate resources for the first MBS session (i.e., a multicast (MBS) session).

In some implementations, the CN 110 includes a first MBS quality of service (QoS) flow configuration(s) for the first MBS session in the first CN-to-BS message. In some implementations, the first MBS QoS flow configuration(s) configures MBS QoS flow(s) 1, ..., *M* associated with the first MBS session. *M* is an integer and larger than zero. In some implementations, the first MBS QoS flow configuration(s) include MBS QoS flow identifier(s) 1, ..., *M* and/or MBS QoS flow level QoS parameter(s) 1, ..., *M* for the MBS QoS flow(s) 1, ..., M associated with the first MBS session, respectively. In some implementations, each of the MBS QoS flow configuration(s) 1, ..., *M* includes an MBS QoS flow identifier and MBS QoS flow level QoS parameters for a particular MBS QoS flow.

In some implementatons, the CN 110 can include, in the first CN-to-BS message, first slice information indicating a network slice used for the first MBS session. For example, the first slice information can be *Single Network Slice Selection Assistance Information (S-NSSAI)* identifying the particular network slice. The CU-CP 172A configures and manages resources for the first MBS session based on the first slice information, in addition to the first MBS QoS flow configuration(s). In other implementations, the CN 110 does not include slice information (e.g., *S-NSSAI*) in the first CN-to-BS message. In such cases, a default network slice may be used for the first MBS session, and the CU-CP 172A configures and manages resources for the first MBS session within the default network slice.

In some implementations, the CN 110 can include, in the first CN-to-BS message, first MBS area information (e.g., *MBS Service Area* IE) configuring or indicating MBS area(s) for the first MBS session. In cases where the first MBS session is a location dependent multicast session, the first MBS area information includes one or more tuples of {*MBS Area Session ID* IE, *MBS Service Area Information* IE}. In cases where the first MBS session is a location independent multicast session, the first MBS are information includes an *MBS Service Area Information* IE. A *MBS Service Area Information* IE in the first MBS area information includes a list of cell identity/identities and/or a list of tracking area identity/identities (TAI(s)). In one implementation, the cell identity/identities is/are cell global identity/identities (CGI(s)). In other implementations, the CN 110 does not include MBS area information (e.g., *MBS Service Area* IE) in the first CN-to-BS message.

After receiving 504 the first CN-to-BS message, the CU-CP 172A sends 560 to the CU-UP 172B a first CP-to-UP message (e.g., *MC Bearer Context Setup Request* message) to request resources for the first MBS session. In some implementations, the CU-CP 172A determines to configure one or more MRBs for the first MBS session or the MBS QoS flow(s) 1, ..., *M.* In response to the determination, the CU-CP 172A generates a MRB setup configuration for requesting resources for the one or more MRBs. The CU-CP 172A includes the first MBS session ID, the MRB setup configuration and/or second MBS QoS flow configuration(s) for the first MBS session in the first CP-to-UP message. In some implementations, the second MBS QoS flow configuration(s) include QoS parameters for the MBS QoS flow(s) associated with the first MBS session. In some implementations, the QoS parameters include 5G QoS identifier(s) (5QI(s)), priority level(s), packet delay budget(s), packet error rate(s), averaging window(s), and/or maximum data burst volume(s), for example.

In some implementations, the CU-CP 172A can include the second MBS QoS flow configuration(s) (e.g., *MBS QoS flows Information to be Setup* and/or *MRB QoS* IE(s), or *QoS-Flow-QoS-Parameter-List* and/or *QoSFlowLevelQoSParameters* IE(s)) in the MRB setup configuration (e.g., *MCMRBSetupConfiguration* IE). In some implementations, the MRB setup configuration includes one or more MRB setup configuration item(s) (e.g. *MCMRBSetupConfiguration-Item* IE(s)). In some implementations, each of the MRB setup configuration item(s) includes a MRB ID, MRB configuration parameters (e.g., a PDCP configuration and/or a SDAP configuration), and/or particular one(s) of the second MBS QoS flow configuration(s) for a particular MRB. In some implementations, the PDCP configuration includes a UL PDCP sequence number size configuration, a DL PDCP sequence number size configuration and/or a RLC mode configuration (e.g., acknowledged mode or unacknowledged mode). In some implementations, the SDAP configuration includes a default DRB configuration (e.g., *DefaultDRB* IE), a SDAP UL header configuration (e.g., *SDAP-Header-UL*) and/or a SDAP DL header configuration (e.g., *SDAP-Header-DL*)*.*

In some implementations, the second MBS QoS flow configuration(s) include QoS parameters required for each of the MBS QoS flow(s) associated with the MRB(s). In some implementations, the second MBS QoS flow configuration(s) include MBS QoS flow identifier(s) 1, ..., *M* and/or MBS QoS flow level QoS parameter(s) 1, ..., *M* for the MBS QoS flow(s) 1, ..., *M* associated with the first MBS session, respectively. The MBS QoS flow identifier(s) 1, ..., *M* identify the MBS QoS flow(s) 1, ..., *M*, respectively. For example, the MRB setup configuration includes MRB setup configuration item(s) 1, ..., *N* for the MRB(s) 1, ..., *N*, respectively. *N* is an integer and larger than zero. In the MRB setup configuration, the CU-CP 172A can configure mapping(s) or association(s) between the MBS QoS flow(s) 1, ..., *M* and MRB(s) 1, ..., *N*, where *N* is an integer and *M>=N>0.* In some implementations, the CU-CP 172A associates or maps a particular QoS flow to only a particular MRB. In other words, the CU-CP 172A refrains from associating or mapping a particular QoS flow to two MRBs. In some implementations, the MRB setup configuration item *X* includes MRB ID *X*, PDCP configuration *X*, SDAP configuration *X*, and/or particular MBS QoS flow configuration(s) of the second MBS QoS flow configuration(s), for MRB *X* of the MRB(s) 1, .., *N*, where 1 *<= X <= N.*

The *MCMRBSetupConfiguration* is the sequence of *SIZE(1..maxnoofMRBs))* of *MCMRBSetupConfiguration-Item.* Table 1 below describes the MRB setup configuration items:

**(Table 1)**

| **MCMRB Setup Configuration Item** | ***Sequence*** |
|---|---|
| **mrb-ID** | *MRB-ID* |
| **sdap-config** | *SDAP-Configuration* |
| **mbs-pdcp-config** | *PDCP-Configuration* |
| **qoS-Flow-QoS-Parameter-List** | *QoS-Flow-QoS-Parameter-List* |
| **qoSFlowLevelQoSParameters (Optional)** | *QoSFlowLevelQoSParameters* |
| **iE⁻Extensions (Optional)** | *ProtocolExtension Container {{MCMRBSetupConfiguration-Item-ExtIEs}}* |

Table 2 below describes another MRB setup configuration, where the CU-CP 172 A omits the SDAP-Configuration:

**(Table 2)**

| | |
|---|---|
| **MCMRB Setup Configuration Item** | ***Sequence*** |
| **mrb-ID** | *MRB-ID* |
| **mbs-pdcp-config** | *PDCP-Configuration* |
| **qoS-Flow-QoS-Parameter-List** | *QoS-Flow-QoS-Parameter-List* |
| **qoSFlowLevelQoSParameters** (Optional) | *QoSFlowLevelQoSParameters* |
| **iE-Extensions** (Optional) | *ProtocolExtensionContainer {{MCMRBSetupConfiguration-Item-ExtIEs}}* |

In some implementations, the CU-CP 172A generates the second MBS QoS flow configuration(s) based on the first MBS QoS flow configuration(s). For example, the second MBS QoS flow configuration(s) are the same as the first MBS QoS flow configuration(s). In another example, the second MBS QoS flow configuration(s) are similar to the first MBS QoS flow configuration(s).

In some cases where the CU-CP 172A receives the first slice information from the CN 110, e.g., in the first CN-to-BS message, the CU-CP 172A includes the first slice information in the first CP-to-UP message to indicate that the first MBS session uses the particular network slice indicated by the first slice information. Thus, the CU-UP 172B configures and manage resources based on the first slice information, in addition to the second MBS QoS flow configuration(s). In some cases where the CU-CP 172A does not receive slice information from the CN 110 (e.g., in the first CN-to-BS message), the CU-CP 172A includes preconfigured slice information in the first CP-to-UP message to indicate a particular network slice is used for the first MBS session. Thus, the CU-UP 172B configures and manage resources based on the preconfigured slice information, in addition to the second MBS QoS flow configuration(s). Alternatively, the CU-CP 172A in some such cases omits slice information from the first CP-to-UP message to indicate the first MBS session uses a default network slice. Thus, the CU-UP 172B configures and manage resources, based on the second MBS QoS flow configuration(s), within or using the default network slice.

In some cases where the CU-CP 172A receives the first MBS area information from the CN 110 (e.g., in the first CN-to-BS message), the CU-CP 172A includes the first MBS area information in the first CP-to-UP message. In some cases where the CU-CP 172A does not receive MBS area information from the CN 110, e.g., in the first CN-to-BS message, the CU-CP 172A includes preconfigured MBS area information in the first CP-to-UP message. Alternatively, the CU-CP 172A in some such cases omits MBS area information from the first CP-to-UP message. In some cases where the CU-CP 172A receives the first MBS area information from the CN 110, e.g., in the first CN-to-BS message, the CU-CP 172A retrieves an *MBS Area Session ID* from the first MBS area information and includes the *MBS Area Session* ID in the first CP-to-UP message. In some further such cases, the CU-CP 172A refrains from including an *MBS Service Area Information* IE in the first CP-to-UP message. In some cases where the CU-CP 172A does not receive MBS area information from the CN 110, e.g., in the first CN-to-BS message, the CU-CP 172A includes preconfigured *MBS Area Session ID* in the first CP-to-UP message. Alternatively, the CU-CP 172A in some such cases omits *MBS Area Session ID* from the first CP-to-UP message.

In response to the first CP-to-UP message, the CU-UP 172B establishes or configures resources for the MRB(s) and sends 562 a first UP-to-CP message (e.g., *MC Bearer Context Setup Response* message). In some implementations, the CU-UP 172B configures resources for each of the MRB(s) based on the corresponding MRB configuration parameters and/or particular one(s) of the second MBS QoS flow configuration(s). In some implementations, the CU-UP 172B configures resources for the MRB(s), MBS QoS flow(s) and/or first MBS session based on the first slice information. In some implementations, the CU-UP 172B establishes and/or configures PDCP entity/entities 1, ..., *N* in accordance with the PDCP configuration(s) 1, ..., *N* for the MRB(s) or MRB ID(s) 1, ..., *N*, respectively. In other implementations, for each of the PDCP configuration(s) 1, ..., *N,* the CU-UP 172B ignores or discards a portion of the PDCP configuration and establishes and/or configures a PDCP entity in accordance with the rest of the PDCP configuration. In one implementation, the CU-UP 172B ignores or discards the UL PDCP sequence number size configuration, and establishes and/or configures a PDCP entity in accordance with the DL PDCP sequence number size configuration and/or RLC mode. In another implementation, the CU-UP 172B ignores or discards the UL PDCP sequence number size configuration and the RLC mode, and establishes and/or configures a PDCP entity in accordance with the DL PDCP sequence number size configuration.

In some implementations, the CU-UP 172B establishes and/or configures SDAP entity/entities 1, ..., *N* in accordance with the SDAP configuration(s) 1, ..., *N* for the MRB(s) or MRB ID(s) 1, ..., *N*, respectively. In other implementations, for each of SDAP configuration(s) 1, ..., *N,* the CU-UP 172B ignores or discards a portion of the SDAP configuration and establishes and/or configures an SDAP entity in accordance with the rest of the SDAP configuration. In one implementation, the CU-UP 172B ignores or discards the default DRB configuration and SDAP UL header configuration, and establishes and/or configures a SDAP entity in accordance with the SDAP DL header configuration. In another implementation, the CU-UP 172B ignores or discards the default DRB configuration and establishes and/or configures a SDAP entity in accordance with the SDAP UL header configuration and SDAP DL header configuration. In yet other implementations, the CU-UP 172B ignores or discards the entire SDAP configuration, because the CU-UP 172B determines not to use SDAP to transmit MBS data of the first MBS session.

In some implementations, the CU-UP 172B includes, in the first UP-to-CP message, a first CU transport layer configuration to configure a common CN-to-BS DL tunnel for the first MBS session. In some implementations, the first CU transport layer configuration includes a CU transport layer address *(e.g.,* an IP address and/or a TEID) to identify a first common CN-to-BS DL tunnel. In other implementations, the first CU transport layer configuration is an *MC Bearer Context NG-U TNL Info at NG-RAN* IE. In some implementations, the CU-CP 172A includes a first CU-CP MBS E1AP ID in the first CP-to-UP message to identify the first MBS session on an E1 interface between the CU-CP 172A and CU-UP 172B. In some implementations, the CU-UP 172B includes a first CU-UP MBS E1AP ID in the first UP-to-CP message to identify the first MBS session on an E1 interface between the CU-CP 172A and CU-UP 172B. In further implementations, the CU-UP 172B includes the first CU-CP MBS E1AP ID in the first UP-to-CP message.

The events 560 and 562 are collectively referred to in Fig. 5A as an MC Bearer Context Setup procedure.

After (e.g., in response to) receiving 504 the first CN-to-BS message, the CU-CP 172A sends 506 a first CU-to-DU message (*e.g., a Multicast Context Setup Request* message) to the DU 174 to request a set-up for an multicast context and/or a common DL tunnel for the first MBS session. See FIG. 4 and accompanying text. The CU-CP 172A determines to configure one or more MRBs for the first MBS session or the MBS QoS flow(s) 1, ..., *M.* In response to the determination, the CU-CP 172A generates a MRB to be setup configuration for requesting resources for the one or more MRBs. In some implementations, the first CU-to-DU message includes the first MBS session ID, the MRB to be setup configuration, and/or third MBS QoS flow configuration(s) for the first MBS session. In some implementations, the CU-CP 172A includes the first slice information in the first CU-to-DU message to indicate that the particular network slice indicated by the first slice information is used for the first MBS session. In some implementations, the MRB to be setup configuration include MRB ID(s) each identifying a MRB and the DU 174 configures resources (e.g., PHY, MAC and/or RLC resources) for the MRB(s). The MRB ID(s) included in the first CU-to-DU message is/are the same as the MRB ID(s) included in the first CP-to-UP message. For example, the MRB to be setup configuration includes the MRB ID(s) 1, ..., *N* for the MRB(s) 1, ..., *N*, respectively. The third MBS QoS flow configuration(s) include QoS parameters required for the MBS QoS flow(s) associated with the first MBS session. In some implementations, the third MBS QoS flow configuration(s) include MBS QoS flow identifier(s) 1, ..., *M* and/or MBS QoS flow level QoS parameter(s) 1, ..., *M* for the MBS QoS flow(s) 1, ..., *M* associated with the first MBS session, respectively. The MBS QoS flow identifier(s) 1, ..., *M* identify the MBS QoS flow(s) 1, ..., *M*, respectively. In the MRB to be setup configuration, the CU-CP 172A can configure mapping(s) or association(s) between the MBS QoS flow(s) and MRB(s). For example, the MRB to be setup configuration includes MRB to be setup configuration item(s) 1, ..., *N* for the MRB(s) 1, ..., *N,* respectively. In some implementations, the MRB to be setup configuration item *Y* includes MRB ID *Y* and particular MBS QoS flow configuration(s) of the third MBS QoS flow configuration(s), for MRB *Y* of the MRB(s) 1, .., *N*, where 1 *<= Y <= N.* In some implementations, the CU-CP 172A generates the third MBS QoS flow configuration(s) based on the first MBS QoS flow configuration(s). For example, the third MBS QoS flow configuration(s) are the same as the first MBS QoS flow configuration(s). In another example, the third MBS QoS flow configuration(s) are similar to the first MBS QoS flow configuration(s). In some implementations, the CU-CP 172A includes a CU MBS F1AP ID in the first CU-to-DU message to identify the first MBS session on an F1 interface between the CU-CP 172A and DU 174.

In cases where the CU-CP 172A receives the first slice information (e.g., S-NSSAI) associated with the first MBS session from the CN 110, e.g., in the first CN-to-BS message, the CU-CP 172A includes the first slice information in the first CU-to-DU message to indicate the particular network slice is used for the first MBS session. In cases where the CU-CP 172A does not receive slice information (e.g., S-NSSAI) associated with the first MBS session from the CN 110, e.g., in the first CN-to-BS message, the CU-CP 172A includes preconfigured slice information in the first CU-to-DU message. Alternatively, the CU-CP 172A in such cases omit slice information in the first CP-to-UP message.

In cases where the CU-CP 172A receives the first MBS area information from the CN 110, e.g., in the first CN-to-BS message, the CU-CP 172A can include the first MBS area information in the first CU-to-DU message. In cases where the CU-CP 172A does not receive MBS area information from the CN 110, e.g., in the first CN-to-BS message, the CU-CP 172A can include preconfigured MBS area information in the first CU-to-DU message. Alternatively, the CU-CP 172A in such cases omits MBS area information from the first CU-to-DU message. In cases where the CU-CP 172A receives the first MBS area information from the CN 110, e.g., in the first CN-to-BS message, the CU-CP 172A can retrieve an *MBS Area Session ID* from the first MBS area information and include the *MBS Area Session* ID in the first CU-to-DU message. In cases where the CU-CP 172A does not receive MBS area information from the CN 110, e.g., in the first CN-to-BS message, the CU-CP 172A can include preconfigured *MBS Area Session ID* in the first CU-to-DU message. Alternatively, the CU-CP 172A in such cases omits *MBS Area Session ID* from the first CU-to-DU message.

In response to receiving 506 the first CU-to-DU message, the DU 174 establishes or configure resources (e.g., a multicast context and/or PHY, MAC, RLC and/or tunnel resources) for the MRB(s) and sends 508 a first DU-to-CU message (*e.g., a Multicast Context Setup Response* message) to the CU-CP 172A. In some implementations, the DU 174 establishes and/or configure a MAC entity for the MRB(s). In some implementations, the DU 174. In some implementations, the CU-UP 172B establishes and/or configures RLC entity/entities 1, ..., *N* for the MRB(s) or MRB ID(s) 1, ..., *N*, respectively. In some implementations, the DU 174 includes, in the first DU-to-CU message, a first DU transport layer configuration to configure a common CU-to-DU DL tunnel for the first MBS session (*e.g*., for an MRB identified by one of the MRB ID(s)). The DU 174 can include, in the first DU-to-CU message, additional DU transport layer configuration(s) to configure additional common CU-to-DU DL tunnel(s) for additional MRB(s) identified by additional MRB ID(s) of the MRB IDs. In some implementations, the DU 174 can include, in the first DU-to-CU message, the MRB ID(s) associated with the first DU transport layer configuration and/or the additional DU transport layer configuration(s). For example, each of the MRB ID(s) is associated with a particular DU transport layer configuration. In some implementations, each of the first DU transport layer configuration and/or the additional DU transport layer configuration(s) includes a DU transport layer address (e.g., an IP address and/or a TEID). In some implementations, each of the first DU transport layer configuration and/or the additional DU transport layer configuration(s) can be a *MRB F1-U TNL Info at DU* IE.

The events 506 and 508 are collectively referred to in Fig. 5A as a Multicast Context Setup procedure. In some implementations, the Multicast Context Setup procedure and the MC Bearer Context Setup procedure can occur in parallel. In other implementations, the Multicast Context Setup procedure can occur after the MC Bearer Context Setup procedure or vice versa.

In some implementations, the DU 174 transmits 510 a second DU-to-CU message (e.g., *Multicast Distribution Setup Request* message) to the CU-CP 172A after receiving 506 the first CU-to-DU message or transmitting 508 the first DU-to-CU message. In some implementations, the DU 174 includes the first DU transport layer configuration and/or the additional DL transport layer configuration(s) in the second DU-to-CU message instead of the first DU-to-CU message. In some implementations, the DU 174 can include, in the second DU-to-CU message, the MRB ID(s) associated with the first DU transport layer configuration and/or the additional DU transport layer configuration(s) instead of the first DU-to-CU message. Thus, the first DU-to-CU message does not include a DU transport layer configuration. In some implementations, the CU-CP 172A transmits 516 a second CU-to-DU message (e.g., *Multicast Distribution Setup Response* message) to the DU 174 in response to the second DU-to-CU message. The events 510 and 516 are collectively referred to in Fig. 5A as a Multicast Distribution Setup procedure.

After receiving 504 the first CN-to-BS message, receiving 562 the first UP-to-CP message, receiving 508 the first DU-to-CU message or receiving 510 the second DU-to-CU message, the CU-CP 172A transmits 512 a first BS-to-CN message (e.g., a *Distribution Setup Request* message) to the CN 110. In some implementations, the CU-CP 172A transmits 512 the first BS-to-CN message to the CN 110, before receiving 508 the first DU-to-CU message or receiving 510 the second DU-to-CU message. In some implementations, the CU-CP 172A can include the first CU transport layer configuration in the first BS-to-CN message. Thus, the CN 110 can send MBS data to the CU-UP 172B via the first common CN-to-BS DL tunnel as described for event 532. In some implementations, the CU-CP 172A can include the first MBS session ID in the first BS-to-CN message. In some implementations, the CN 110 sends 514 a second CN-to-BS message (e.g., a *Distribution Setup Response* message) to the CU-CP 172A in response to the first BS-to-CN message. In some implementations, the CN 110 can include a first CN transport layer configuration in the second CN-to-BS message. The first CN transport layer configuration includes at least one CN transport layer address *(e.g.,* IP address(s)) to identify the first common CN-to-BS DL tunnel. In some implementations, the at least one transport layer address includes an IP source address and/or an IP multicast address. In some implementations, the first CN transport layer configuration includes a TEID at/of the CN 110. In some implementations, the CN 110 includes fourth MBS QoS flow configuration(s) for the first MBS session in the second CN-to-BS message. In one implementation, the fourth MBS QoS flow configuration(s) are similar to the first MBS QoS flow configuration(s).

After receiving 514 the second CN-to-BS message, the CU-CP 172A sends 564 a second CP-to-UP message (e.g., *MC Bearer Context Modification Request* message) to the CU-UP 172B. In some implementations, the CU-CP 172A includes the MRB ID(s), first DU transport layer configuration, additional DU transport layer configuration(s) and/or first CN transport layer configuration in the second CP-to-UP message. In response to the second CP-to-UP message of event 564, the CU-UP 172B sends 566 a second UP-to-CP message (e.g., *MC Bearer Context Modification Response* message). In some implementations, the CU-UP 172B includes the MRB ID(s) and/or a second CU transport layer configuration in the second UP-to-CP message. In some implementations, the second CU transport layer configuration includes a CU transport layer address *(e.g.,* an IP address) to identify the first common CU-to-DU DL tunnel. The second CU transport layer configuration can additionally include a TEID at/of the CU-UP 172B. In some implementations, the second CU transport layer configuration are the same the same as the first CU transport layer configuration. In other implementations, the second CU transport layer configuration are different from the first CU transport layer configuration. In some implementations, the CU-CP 172A includes the second CU transport layer configuration in the second CU-to-DU message and sends 516 the second CU-to-DU message to the DU 174 in response to the second DU-to-CU message of event 510. After receiving 566 the second UP-to-CP message or transmitting 516 the second CU-to-DU message, the CU-CP 172A sends 518 a second BS-to-CN message (e.g. *Multicast Session Activation Response* message) to the CN 110 in response to the first CN-to-BS message. Alternatively, the CU-CP 172A sends 518 the second BS-to-CN message to the CN 110 before receiving 566 the second UP-to-CP message or transmitting 516 the second CU-to-DU message. For example, the CU-CP 172A sends 518 the second BS-to-CN message to the CN 110 after receiving 504 the first CN-to-BS message, receiving 562 the first UP-to-CP message, receiving 510 the second DU-to-CU message or receiving 514 the second CN-to-BS message.

In some implementations, the CU-CP 172A can include the fourth MBS QoS flow configuration(s) in the *MC Bearer Context Modification Request* message. In such implementations, the CU-UP 172B can modify or reconfigure resources for the MRB(s) based on the fourth MBS QoS flow configuration(s). In some implementations, the CU-UP 172B can determine whether to modify or reconfigure resources for the MRB(s) based on the fourth MBS QoS flow configuration(s). For example, if the resources for the MRB(s) at event 562 still can fulfill the fourth MBS QoS flow configuration(s), the CU-UP 172B does not modify or reconfigure resources for the first MRB. Otherwise, the CU-UP 172B modifies or reconfigures resources for the MRB(s) based on the fourth MBS QoS flow configuration(s). In some implementations, the CU-UP 172B can determine whether to modify or reconfigure resources for a particular MRB of the MRB(s) based on the fourth MBS QoS flow configuration(s). For example, if the resources for a first MRB of the MRB(s) at event 562 still can fulfill particular one(s) of the fourth MBS QoS flow configuration(s) for particular MBS QoS flow(s) mapped to the first MRB, the CU-UP 172B does not modify or reconfigure resources for the first MRB. Otherwise, the CU-UP 172B modifies or reconfigures resources for the first MRB based on the particular MBS QoS flow configuration(s).

The events 504, 560, 562, 506, 508, 510, 512, 514, 564, 566, 516, and 518 are collectively referred to in Fig. 5A as an MBS session resource setup procedure 592A.

In some implementations, the CN 110 can send 520 to the CU-CP 172A a third CN-to-BS message indicating (only) that the UE 102 (e.g., the UE 102A) joins the first MBS session. In some implementations, the CN 110 can include, in the third CN-to-BS message, the first MBS session ID and/or MBS QoS flow identifier(s) identifying the first MBS session and MBS QoS flow(s) associated with the first MBS session, respectively. In response to the third CN-to-BS message, the CU-CP 172A can send 527 a third BS-to-CN message to the CN 110. After (e.g., in response to) receiving the third CN-to-BS message, the CU-CP 172A can send 522 to the DU 174 a UE Context Request message for the UE 102. In some implementations, the CU-CP 172A can include the MRB ID(s) in the UE Context Request message. In some implementations, the CU-CP 172A determines the MRB ID(s) based on the first MBS session ID and/or MBS QoS flow identifier(s) received in the third CN-to-BS message. In some implementations, the CU-CP 172A may not include the first MBS session ID in the UE Context Request message.

In response to the UE Context Request message of event 522, the DU 174 sends 524 to the CU-CP 172A a UE Context Response message including configuration parameters for the UE 102A to receive MBS data of the first MBS session via the MRB(s). Some or all of the configuration parameters may be associated to the MRB(s) / MRB ID(s). In some implementations, the DU 174 generates a DU configuration (*i.e.,* a first DU configuration) to include the configuration parameters (*i.e.,* first plural configuration parameters) and includes the DU configuration in the UE Context Response message. In some implementations, the DU configuration can be a *CellGroupConfig* IE. In other implementations, the DU configuration can be an MBS-specific IE. In some implementations, the configuration parameters configure one or more logical channels (LCs) for the MRB(s). For example, the configuration parameters include one or more logical channel IDs (LCIDs) to configure the one or more logical channel. Each of the LCIDs identifies a particular logical channel of the one or more logical channels. In some implementations, the third CN-to-BS message and the third BS-to-CN message can be a *PDU Session Resource Modify Request* message and a *PDU Session Resource Modify Response* message, respectively. In other implementations, the third CN-to-BS message and the third BS-to-CN message can be a *PDU Session Resource Setup Request* message and a *PDU Session Resource Setup Response* message, respectively. In some implementations, the third CN-to-BS message and the third BS-to-CN message can be UE-associated messages, *i.e.,* the messages are associated to a particular UE *(e.g.,* the UE 102A, 102B, or 103).

In some implementations, the UE Context Request message and the UE Context Response message are a *UE Context Setup Request* message and a *UE Context Setup Response* message, respectively. In other implementations, the UE Context Request message and the UE Context Response message are a *UE Context Modification Request* message and a *UE Context Modification Response* message, respectively.

In some implementations, the CU-CP 172A can perform a (UE-specific) Bearer Context procedure with the CU-UP 172B after (e.g., in response to) receiving the third CN-to-BS message. In the Bearer Context procedure, the CU-CP 172A sends a Bearer Context Request message to the CU-UP 172B to request establishing or modifying a (unicast) bearer context for the UE 102. In response, the CU-UP 172B establishes or modifies a (unicast) bearer context for the UE 102 and sends a Bearer Context Response message to the CU-CP 172A. In other implementations, the CU-CP 172A refrains from performing a (UE-specific) Bearer Context procedure for the UE 102 with the CU-UP 172B upon receiving the third CN-to-BS message. In some implementations, the Bearer Context procedure is a Bearer Context Setup procedure defined in section 8.3.1 in 3GPP specification 37.483. In such cases, the Bearer Context Request message and Bearer Context Setup message are *Bearer Context Setup Request* message and *Bearer Context Setup Response* message, respectively. In other implementations, the Bearer Context procedure is a Bearer Context Modification procedure defined in section 8.3.2 in 3GPP specification 37.483. In such cases, the Bearer Context Request message and Bearer Context Setup message are *Bearer Context Modification Request* message and *Bearer Context Modification Response* message, respectively.

After receiving 524 the UE Context Response message, the CU-CP 172A generates an RRC reconfiguration message (e.g., *RRCReconfiguration* message) including the configuration parameters and one or more MRB configurations *(i.e.,* first MRB configuration(s)) and transmits 526 the RRC reconfiguration message to the DU 174. In turn, the DU 174 transmits 528 the RRC reconfiguration message to the UE 102. The UE 102 then transmits 530 an RRC reconfiguration complete message to the DU 174, which in turn transmits 531 the RRC reconfiguration complete message (e.g., *RRCReconfigurationComplete* message) to the CU-CP 172A.

The events 520, 522, 524, 526, 527 (discussed below), 528, 530, and 531 are collectively referred to in Fig. 5A as a UE-specific MBS session configuration procedure 594. The CN 110 and/or CU-CP 172A perform the procedure 594 for each of UEs (e.g., the UE 102A and the UE 102B) joining the first MBS session. In some scenarios or implementations, the procedure 594 can occur before the procedure 592A. In other scenarios or implementations, the procedure 594 can occur after the procedure 592A. In yet other scenarios or implementations, the procedure 594 can overlap with the procedure 592A.

In some implementations, the CU-CP 172A generates a PDCP PDU including the RRC reconfiguration message and sends 526 a CU-to-DU message including the PDCP PDU to the DU 174. In such implementations, the DU 174 retrieves the PDCP PDU from the CU-to-DU message and transmits 528 the PDCP PDU to the UE 102 via the RLC layer 206B, MAC layer 204B and PHY layer 202B. The UE 102 receives 528 the PDCP PDU from the DU 174 via the PHY layer 202B, MAC layer 204B, and RLC layer 206B. In some implementations, the UE 102 generates a PDCP PDU including the RRC reconfiguration complete message and transmits 530 the PDCP PDU to the DU 174 via the RLC layer 206B, MAC layer 204B, and PHY layer 202B. The DU 174 receives 522 the PDCP PDU from the UE 102 via the PHY layer 202B, MAC layer 204B, and RLC layer 206B, and sends 531 a DU-to-CU including the PDCP PDU to the CU-CP 172A. The CU-CP 172A retrieves the PDCP PDU from the DU-to-CU message and retrieves the RRC reconfiguration complete message from the PDCP PDU.

Before or after receiving 524 the UE Context Response message, the CU-CP 172A can send 527 the third BS-to-CN message to the CN 110 in response to the third CN-to-BS message 520. In some implementations, the CU-CP 172A sends 527 the third BS-to-CN message to the CN 110 before receiving 531 the RRC reconfiguration complete message. In other implementations, the CN 110 sends 527 the third BS-to-CN message to the CN 110 after receiving 531 the RRC reconfiguration complete message. The CU-CP 172A can include a first CN UE interface ID and a first RAN UE interface ID in the third BS-to-CN message. In some implementations, the CN 110 assigns the first CN UE interface ID identifying the UE 102 (e.g., the UE 102A), and the CU-CP 172A assigns the first RAN UE interface ID identifying the UE 102 (e.g., the UE 102A). In some implementations, the "CN UE interface ID" can be a "AMF UE NGAP ID" and the "RAN UE interface ID" can be a "RAN UE NGAP ID".

After receiving 518 the second BS-to-CN message or 527 the third BS-to-CN message, the CN 110 (e.g., (MB-)UPF 162) sends 532 MBS data *(e.g.,* one or multiple MBS data packets) for the first MBS session to the CU-UP 172B via the first common CN-to-BS DL tunnel (i.e., in accordance with the first CU transport layer configuration and/or the first CN transport layer configuration). In some implementations, the CN 110 generates tunnel packets each including a particular MBS data packet to transmit the MBS data packets via the first common CN-to-BS DL tunnel. In a header of each of the tunnel packets, the CN 110 sets a source IP address, a target IP address and a TEID to the IP address in the first CN transport layer configuration, the IP address in the first CU transport layer configuration, and the TEID in the first CU transport layer configuration, respectively. In such implementations, the IP address in the first CN transport layer configuration, the IP address in the first CU transport layer configuration, and the TEID in the first CU transport layer configuration identify the first common CN-to-BS DL tunnel.

When the CU-UP 172B receives 532 the MBS data of the first MBS session from the CN 110, the CU-UP 172B in turn sends 534 the MBS data to the DU 174 via the first common CU-to-DU tunnel and/or additional common CU-to-DU DL tunnel (i.e., in accordance with the first and/or additional DU transport layer configuration(s)). In cases where the MBS data is associated with one or some of the MBS QoS flow(s) identified by the MBS QoS flow identifier(s), the CU-UP 172B can determine to use which common CU-to-DU DL tunnel(s) to send the MBS data to the DU 174, based on the one or some of MBS QoS flow identifier(s). For example, when the CU-UP 172B receives from the CN 110 a first MBS data packet associated with a first one of the MBS QoS flow identifier(s), the CU-UP 172B sends the first MBS data packet to the DU 174 via the first common CU-to-DU DL tunnel. When the CU-UP 172B receives from the CN 110 a second MBS data packet associated with a second one of the MBS QoS flow identifier(s), the CU-UP 172B sends the second MBS data packet to the DU 174 via a one of the additional common CU-to-DU tunnel(s). In some implementations, the CU-UP 172B generates tunnel packets each including a particular MBS data packet to transmit the MBS data packets via the first common CU-to-DU tunnel and/or additional common CU-to-DU DL tunnel. In cases where the CU-UP 172B transmits one of the tunnel packets via the first common CU-to-DU tunnel, the CU-UP 172B sets a source IP address, a target IP address and a TEID in header of the tunnel packet to the IP address in the second CU transport layer configuration, the IP address in the first DU transport layer configuration, and the TEID in the first DU transport layer configuration, respectively. In such implementations, the IP address in the second CU transport layer configuration, the IP address in the first DU transport layer configuration, and the TEID in the first DU transport layer configuration identify the first common CU-to-DU DL tunnel. In cases where the CU-UP 172B transmits one of the tunnel packets via the additional common CU-to-DU tunnel, the CU-UP 172B sets a source IP address, a target IP address and a TEID in a header of the tunnel packet to the IP address in the second CU transport layer configuration, the IP address in the additional DU transport layer configuration, and the TEID in the additional DU transport layer configuration, respectively. In such implementations, the IP address in the second CU transport layer configuration, the IP address in the additional DU transport layer configuration, and the TEID in the additional DU transport layer configuration identify the first common CU-to-DU DL tunnel.

When the DU 174 receives 534 the MBS data from the CU-UP 172B, the DU 174 transmits (e.g., multicast or unicast) 536 the MBS data via the one or more logical channels to the UE 102. The UE 102 receives 536 the MBS data via the one or more logical channels. For example, the CU-UP 172B may receive 532 an MBS data packet, generate a PDCP PDU including the MBS data packet, and transmit 534 the PDCP PDU to the DU 174. In turn, the DU 174 generates a MAC PDU including the logical channel ID and the PDCP PDU, and transmits 536 the MAC PDU to the UE 102 via multicast or unicast. The UE 102 receives 536 the MAC PDU via multicast or unicast, retrieves the PDCP PDU and the logical channel ID from the MAC PDU, identifies the PDCP PDU associated with the MRB in accordance with the logical channel ID, and retrieves the MBS data packet from the PDCP PDU in accordance with a PDCP configuration within the MRB configuration. In some implementations, the DU 174 can transmit 536 the MBS data or the MAC PDU via one or more multicast transmissions (e.g., dynamic or SPS multicast transmission(s)) to the UE 102 as described above. In such cases, the UE 102 can receive 536 the MBS data or the MAC PDU via the one or more multicast transmissions from the DU 174 as described above.

In some implementations, the CU-CP 172A can request the DU 174 to configure a UE-specific CU-to-DU DL tunnel for the UE 102 in the UE Context Request message of event 522. In some implementation, the CU-CP 172A can include a CU transport layer configuration in the UE Context Request message to request a UE-specific CU-to-DU DL tunnel for the UE 102. The CU transport layer configuration includes a CU transport layer address (e.g., an IP address) to identify a UE-specific CU-to-DU DL tunnel. The CU transport layer configuration can additionally include a TEID at/of the CU-UP 172B. In response, the DU 174 can include, in the UE Context Response message, a DU transport layer configuration configuring the UE-specific CU-to-DU DL tunnel. The DU transport layer configuration includes a DU transport layer address (e.g., an IP address and/or a TEID). After receiving 524 the UE Context Response message, the CU-CP 172A can send a *Bearer Context Modification Request* message including the DU transport layer configuration to the CU-UP 172B and in response, the CU-UP 172B sends a *Bearer Context Modification Response* message to the CU-CP 172A. After that, the CU-UP 172B can transmit 534 the MBS data to the DU 174 via the UE-specific CU-to-DU DL tunnel.

In some implementations, the configuration parameters can also include one or more RLC bearer configurations, each associated with a particular MRB. Each of the MRB configuration(s) can include an MRB ID, a PDCP configuration, the first MBS session ID, a PDCP reestablishment indication *(e.g., reestablishPDCP),* and/or a PDCP recovery indication *(e.g., recoveryPDCP).* In some implementations, the PDCP configuration can be a *PDCP-Config* IE for DRB. In some implementations, the RLC bearer configuration can be an *RLC-BearerConfig* IE. In some implementations, the RLC bearer configuration may include a logical channel (LC) ID configuring a logical channel. In some implementations, the logical channel can be a (multicast) MBS traffic channel (MTCH). In other implementations, the logical channel can be a dedicated traffic channel (DTCH). In some implementations, the configuration parameters may include a logical channel configuration (*e.g., LogicalChannelConfig* IE) configuring the logical channel. In some implementations, the RLC bearer configuration may include the MRB ID.

In some implementations, the CU-CP 172A can configure the MRB as a DL-only RB in the MRB configuration. For example, the CU-CP 172A can refrain from including UL configuration parameters in the PDCP configuration within the MRB configuration to configure the MRB as a DL-only RB. The CU-CP 172A can include only DL configuration parameters in the MRB configuration, e.g., as described above. In such cases, the CU-CP 172A configures the UE 102 to not transmit UL PDCP data PDU via the MRB to the DU 174 and/or the CU-CP 172A by excluding the UL configuration parameters for the MRB in the PDCP configuration in the MRB configuration. In another example, the DU 174 refrains from including UL configuration parameters in the RLC bearer configuration. In such cases, the DU 174 configures the UE 102 not to transmit the control PDU(s) via the logical channel to the base station 104 by excluding the UL configuration parameters from the RLC bearer configuration.

In cases where the DU 174 includes UL configuration parameter(s) in the RLC bearer configuration, the UE 102 may transmit control PDU(s) *(e.g.,* PDCP Control PDU(s) and/or RLC Control PDU(s)) via the logical channel to the DU 174 using the UL configuration parameter(s). If the control PDU is a PDCP control PDU, the DU 174 can send the PDCP control PDU to the CU-UP 172B. For example, the CU-CP 172A may configure the UE to receive MBS data with a (de)compression protocol (e.g., robust header compression (ROHC) protocol). In this case, when the CU-UP 172B receives 532 an MBS data packet from the CN 110, the CU-UP 172B compresses the MBS data packet with the compression protocol to obtain compressed MBS data packet(s) and transmits 534 a PDCP PDU including the compressed MBS data packet to the DU 174 via the first or additional common CU-to-DU DL tunnel. In turn, the DU 174 transmits (e.g., multicast or unicast) 536 the PDCP PDU to the UE 102 via the logical channel. When the UE 102 receives the PDCP PDU via the logical channel, the UE 102 retrieves the compressed MBS data packet from the PDCP PDU. The UE 102 decompresses the compressed MBS data packet(s) with the (de)compression protocol to obtain the original MBS data packet. In such cases, the UE 102 may transmit a PDCP Control PDU including, a header compression protocol feedback (e.g., interspersed ROHC feedback) for operation of the header (de)compression protocol, via the logical channel to the DU 174. In turn, the DU 174 sends the PDCP Control PDU to the CU-UP 172B via a UL tunnel. In some implementations, the UL tunnel is a first common DU-to-CU tunnel configured in the first DU transport layer configuration and the second CU transport layer configuration. For example, the IP address in the first DU transport layer configuration, and the IP address and TEID in the second CU transport layer configuration identify the first common DU-to-CU tunnel. In other implementations, the UL tunnel is specific for the UE 102 (*e.g.,* the UE 102A). In some implementations, the CU-CP 172A can include, in the UE Context Request message, a CU transport layer configuration configuring the UE-specific UL tunnel. The CU transport layer configuration includes a CU transport layer address *(e.g.,* an Internet Protocol (IP) address) and a TEID to identify the UE-specific UL tunnel. The DU 174 can include, in the UE Context Response message, a DU transport layer configuration configuring the UE-specific UL tunnel. The DU transport layer configuration includes a DU transport layer address (e.g., an IP address and/or a TEID). For example, the IP address in the DU transport layer configuration, and the IP address and TEID in the CU transport layer configuration identify the first common UL tunnel.

In some implementations, the MRB configuration can be an *MRB-ToAddMod* IE including an MRB ID (*e.g.*, *mrb-Identity* or *MRB-Identity).* An MRB ID identifies a particular MRB of the MRB(s). In cases where the CU-CP 172A has configured DRB(s) to the UE 102 for unicast data communication, the CU-CP 172A in some implementations can set one or more of the MRB ID(s) to values different from DRB ID(s) of the DRB(s). In such cases, the UE 102 and the CU-CP 172A can distinguish whether an RB is an MRB or DRB in accordance an RB ID of the RB. In other implementations, the CU-CP 172A can set one or more of the MRB ID(s) to values which can be the same as the DRB ID(s). In such cases, the UE 102 and the CU-CP 172A can distinguish whether an RB is an MRB or DRB in accordance an RB ID of the RB and an RRC IE configuring the RB. For example, a DRB configuration configuring a DRB is a DRB-ToAddMod IE including a DRB identity (*e.g., drb-Identity* or *DRB-Identity*) and a PDCP configuration. Thus, the UE 102 can determine an RB is a DRB if the UE 102 receives a DRB-ToAddMod IE configuring the RB, and determine an RB is an MRB if the UE 102 receives an MRB-ToAddMod IE configuring the RB. Similarly, the CU-CP 172A can determine an RB is a DRB if the CU-CP 172A transmits a DRB-ToAddMod IE configuring the RB to the UE 102, and determine an RB is an MRB if the CU-CP 172A transmits an MRB-ToAddMod IE configuring the RB to the UE 102.

In some implementations, the configuration parameters for receiving MBS data of the first MBS session include one or more logical channel (LC) IDs to configure one or more logical channels. In some implementations, the logical channel(s) can be dedicated traffic channel(s) (DTCH(s)). In other implementations, the logical channel(s) can be multicast traffic channel(s) (MTCH(s)).

In some implementations, the configuration parameters can include dynamic scheduling multicast configuration parameter(s) for the UE 102 to receive multicast transmissions each including MBS data or a particular portion of MBS data. In some implementations, the dynamic scheduling multicast configuration parameter(s) can include at least one of the following configuration parameters:
- Group radio network temporary identifier (G-RNTI). The DU 174 dynamically schedules each multicast transmission, including a particular MAC PDU, for the UE 102 by generating a DCI, scrambling a cyclic redundancy check (CRC) of the DCI with the G-RNTI, and transmitting the DCI and the scrambled CRC on a PDCCH. The MAC PDU can include an MBS data packet or a portion of an MBS data packet. The UE 102 receives the DCI and scrambled CRC on the PDCCH and verifies the scrambled CRC with the G-RNTI. For each multicast transmission, after the UE 102 verifies the (scrambled) CRC is valid, the UE 102 receives the multicast transmission in accordance with the corresponding DCI and retrieves the particular MAC PDU from the multicast transmission. In this case, each multicast transmission is a dynamic scheduling multicast transmission used in the following description. In some implementations, each DCI includes configuration parameters configuring a dynamic scheduling multicast radio resource scheduling the corresponding multicast transmission. In some implementations, the configuration parameters can include at least one of the following parameters. The configuration parameters of the each DCI can include the same values and/or different values for the following configuration parameters.
   ∘ Frequency domain resource assignment
   ∘ Time domain resource assignment
   ∘ Virtual resource block (VRB)-to-physical resource block (PRB) mapping
   ∘ Modulation and coding scheme (MCS)
   ∘ New data indicator
   ∘ Redundancy version
   ∘ HARQ process number
   ∘ Downlink assignment index
   ∘ PUCCH resource indicator
- HARQ codebook (ID), which indicates a HARQ acknowledgement (ACK) codebook index for a corresponding HARQ ACK codebook for a dynamic scheduling multicast transmission received by the UE 102. The DU 174 uses the HARQ codebook (ID) to receive a HARQ ACK. In cases where the configuration parameters do not include the HARQ codebook (ID), the UE 102 and DU 174 may use a HARQ codebook (ID) for unicast transmission. In some implementations, the UE 102 can receive the HARQ codebook (ID) for unicast transmission in the DU configuration from the DU 174. In other implementations, the UE 102 can receive the HARQ codebook (ID) for unicast transmission in another DU configuration from the DU 174, similar to events 516, 518 and 520.
- PUCCH resource configuration, which indicates a HARQ resource on a PUCCH where the UE 102 transmits a HARQ feedback (*e.g*., HARQ ACK and/or negative ACK (NACK)) for a dynamic scheduling multicast transmission. In cases where the configuration parameters do not include the PUCCH resource configuration, the UE 102 and DU 174 can use a PUCCH resource configuration for unicast transmissions to communicate HARQ feedback.
- HARQ NACK only indication, which configures the UE 102 to only transmit a HARQ negative ACK (NACK) for a dynamic scheduling multicast transmission that the UE 102 receives from the DU 174 and from which the UE 102 fails to obtain a transport block. In some implementations, the UE 102 fails to obtain the transport block because the UE 102 fails a cyclic redundancy check (CRC) for the transport block or the UE 102 does not receive the dynamic scheduling multicast transmission. In accordance with the indication, the UE 102 refrains from transmitting to the DU 174 a HARQ ACK for a dynamic scheduling multicast transmission that the UE 102 successfully receives and from which the UE 102 obtains a transport block. In cases where the configuration parameters do not include the indication, the UE 102 can transmit to the DU 174 a HARQ ACK for a dynamic scheduling multicast transmission that the UE 102 successfully receives and from which the UE 102 obtains a transport block.
- HARQ ACK/NACK indication, which configures the UE 102 to transmit a HARQ NACK for a dynamic scheduling multicast transmission where the UE 102 fails to obtain a transport block and configures the UE 102 to transmit a HARQ ACK for a dynamic scheduling multicast transmission that the UE 102 successfully receives and from which the UE 102 obtains a transport block. In cases where the configuration parameters do not include the indication, the UE 102 refrains from transmitting to the DU 174 a HARQ ACK for a dynamic scheduling multicast transmission that the UE 102 successfully receives and from which the UE 102 obtains a transport block. In such cases, the UE 102 is only allowed to transmit to the DU 174 a HARQ NACK for a dynamic scheduling multicast transmission where the UE 102 fails to obtain a transport block.
- HARQ ACK indication, which configures the UE 102 to transmit a HARQ ACK for a dynamic scheduling multicast transmission that the UE 102 successfully receives and from which the UE 102 obtains a transport block. In cases where the configuration parameters do not include the indication, the UE 102 refrains from transmitting to the DU 174 a HARQ ACK for a dynamic scheduling multicast transmission where the UE 102 successfully obtains a transport block. In such cases, the UE 102 is only allowed to transmit to the DU 174 a HARQ NACK for a dynamic scheduling multicast transmission where the UE 102 fails to obtain a transport block. In some implementations, the DU 174 can include either one of the HARQ NACK indication, HARQ ACK/NACK indication and HARQ ACK indication.
- Modulation and coding scheme (MCS) configuration, which indicates a MCS table that the DU 174 uses to transmit dynamic scheduling multicast transmissions and the UE 102 uses to receive dynamic scheduling multicast transmissions. For example, the MCS table can be a MCS table defined in 3GPP specification 38.214 *(e.g.,* a low-SE 64QAM table indicated in Table 5.1.3.1-3 of 3GPP TS 38.214 or a new table specific for multicast transmission). In some implementations, if DU 174 does not include the MCS configuration in the DU configuration, the UE 102 and DU 174 can apply a MCS table predefined in 3GPP specification 38.214. For example, the predefined MCS table can be a 256QAM table or a 64QAM table, *e.g.,* indicated in Table 5.1.3.1-2 or non-low-SE 64QAM table indicated in Table 5.1.3.1-1 of the specification 38.214, respectively. In cases where the DU 174 does not include the MCS configuration in the DU configuration, the UE 102 and DU 174 can apply a MCS table for unicast transmission to receive dynamic scheduling multicast transmissions from the DU 174. In some implementations, the DU 174 can include, in the DU configuration, a PDSCH configuration (*e.g., PDSCH-Config*) configuring the MCS table for unicast transmissions. In other implementations, the DU 174 can transmit to the UE 102 another DU configuration including the PDSCH configuration, similar to events 516, 518, and 520.
- Aggregation factor, which is the number of repetitions for dynamic scheduling multicast transmission(s). The DU 174 can transmit *(i.e.,* multicast) a number of repetitions of a dynamic scheduling multicast transmission in accordance the aggregation factor, and the UE 102 receives the repetitions based on the aggregation factor. In cases where the DU 174 does not include the aggregation factor in the DU configuration, the UE 102 in some implementations can apply an aggregation factor for unicast transmission(s). In some implementations, the DU 174 can include the aggregation factor for unicast transmission(s) to the UE 102 in the DU configuration. In other implementations, the DU 174 can transmit another DU configuration including the aggregation factor for unicast transmissions to the UE 102, similar to events 516, 518, and 520.

The RRC reconfiguration messages for UEs joining the first MBS session, include the same configuration parameters for receiving MBS data of the first MBS session. In some implementations, the RRC reconfiguration messages for the UEs may include the same or different configuration parameters for receiving non-MBS data.

In some implementations, the configuration parameters can include at least one semipersistent scheduling (SPS) multicast configuration for the UE 102 to receive MBS data. Each of the at least one SPS multicast configuration can include at least one of the following parameters for SPS multicast transmissions.
- Group configured scheduling radio network temporary identifier (G-CS-RNTI), which is used to activate or release an SPS multicast radio resource. The DU 174 can activate an SPS multicast radio resource for the UE 102 by generating an SPS multicast radio resource activation command *(i.e.,* a DCI), scrambling a CRC of the DCI with the G-CS-RNTI, and transmitting the DCI and the scrambled CRC on a PDCCH. After activating the SPS multicast radio resource, the DU 174 periodically transmits a multicast transmission on the SPS multicast radio resource in accordance with the DCI. The UE 102 receives the DCI and scrambled CRC on the PDCCH and verifies the scrambled CRC with the G-CS-RNTI. After the UE 102 verifies the (scrambled) CRC is valid, the UE 102 activates (receiving on) the SPS multicast radio resource in response to the DCI and periodically receives a multicast transmission on the SPS multicast radio resource in accordance with the SPS multicast radio resource activation command *(i.e.,* DCI) before the UE 102 deactivates the SPS multicast radio resource. In this case, the multicast transmission is an SPS multicast transmission used in the following description. In some implementations, the DU 174 can deactivate (or release) the SPS multicast radio resource by generating an SPS multicast radio resource deactivation command *(i.e.,* a DCI), scrambling a CRC of the DCI with the G-CS-RNTI, and transmitting the DCI and the scrambled CRC on a PDCCH. The UE 102 receives the DCI and scrambled CRC on the PDCCH and verifies the scrambled CRC with the G-CS-RNTI. After the UE 102 verifies the (scrambled) CRC is valid, the UE 102 deactivates the SPS multicast radio resource, *i.e.,* stops receiving on the SPS multicast radio resource. Each of the SPS multicast transmissions includes a particular MAC PDU which can include an MBS data packet or a portion of an MBS data packet. In some implementations, the SPS multicast radio resource activation command *(i.e.,* DCI) includes configuration parameters configuring the SPS multicast radio resource. In some implementations, the configuration parameters can include at least one of the following parameters.
   ∘ Frequency domain resource assignment
   ∘ Time domain resource assignment
   ∘ Virtual resource block (VRB)-to-physical resource block (PRB) mapping
   ∘ Modulation and coding scheme (MCS)
   ∘ New data indicator
   ∘ Redundancy version
   ∘ HARQ process number
   o Downlink assignment index
   o PUCCH resource indicator
- Periodicity, which indicates a periodicity of the SPS multicast radio resource.
- Number of HARQ processes, which indicates a number of HARQ processes for communicating SPS multicast transmissions. The DU 174 uses at most the number of HARQ processes to transmit SPS multicast transmissions, and the UE 102 uses at most the number of HARQ processes to receive the SPS multicast transmissions.
- HARQ codebook ID, which indicates a HARQ ACK codebook index for a corresponding HARQ ACK codebook for an SPS multicast transmission or an SPS multicast radio resource deactivation command received by the UE 102. In cases where the configuration parameters do not include the HARQ codebook (ID), the UE 102 may use a HARQ codebook (ID) for dynamic scheduling multicast transmission as described above. Alternatively, the UE 102 may use a HARQ codebook (ID) for unicast transmission. In some implementations, the UE 102 can receive the HARQ codebook (ID) for unicast transmission in the DU configuration from the DU 174 as described above.
- HARQ process ID offset, which indicates an offset used in deriving HARQ process IDs for the DU 174 to transmit SPS multicast transmissions and for the UE 102 to receive SPS multicast transmissions.
- PUCCH resource configuration for SPS multicast transmission, which indicates a HARQ resource on a PUCCH where the UE 102 transmits HARQ feedback *(e.g.,* HARQ ACK and/or negative ACK (NACK)) for an SPS multicast transmission. In cases where the configuration parameters do not include the PUCCH resource configuration for SPS multicast transmission, the UE 102 and DU 174 can use a PUCCH resource configuration for dynamic scheduling multicast transmission to communicate a HARQ feedback as described above. Alternatively, the UE 102 can use a PUCCH resource configuration for unicast transmissions. In some implementations, the UE 102 can use the PUCCH resource configuration for unicast transmissions as described above.
- HARQ NACK only indication, which configures the UE 102 to only transmit a HARQ negative ACK (NACK) for an SPS multicast transmission that the UE 102 receives from the DU 174 and from which the UE 102 fails to obtain a transport block. In some implementations, the UE 102 fails to obtain the transport block because the UE 102 fails a cyclic redundancy check (CRC) for the transport block or the UE 102 does not receive the dynamic scheduling multicast transmission. In accordance with the indication, the UE 102 refrains from transmitting to the DU 174 a HARQ ACK for an SPS multicast transmission that the UE 102 successfully receives and from which the UE 102 obtains a transport block. In cases where the configuration parameters do not include the indication, the UE 102 can transmit to the DU 174 a HARQ ACK for an SPS multicast transmission that the UE 102 successfully receives and from which the UE 102 obtains a transport block.
- HARQ ACK/NACK indication, which configures the UE 102 to transmit a HARQ NACK for an SPS multicast transmission where the UE 102 fails to obtain a transport block and configures the UE 102 to transmit a HARQ ACK for an SPS multicast transmission that the UE 102 successfully receives and from which the UE 102 obtains a transport block. In cases where the configuration parameters do not include the indication, the UE 102 refrains from transmitting to the DU 174 a HARQ ACK for an SPS multicast transmission that the UE 102 successfully receives and obtains a transport block. In such cases, the UE 102 is only allowed to transmit to the DU 174 a HARQ NACK for an SPS multicast transmission where the UE 102 fails to obtain a transport block.
- HARQ ACK indication, which configures the UE 102 to transmit a HARQ ACK for an SPS multicast transmission that the UE 102 successfully receives and from which the UE 102 obtains a transport block. In cases where the configuration parameters do not include the indication, the UE 102 refrains from transmitting to the DU 174 a HARQ ACK for an SPS multicast transmission where the UE 102 successfully obtains a transport block. In such cases, the UE 102 is only allowed to transmit to the DU 174 a HARQ NACK for an SPS multicast transmission where the UE 102 fails to obtain a transport block. In some implementations, the DU 174 can include either one of the HARQ NACK indication, HARQ ACK/NACK indication and HARQ ACK indication.
- Aggregation factor, which is the number of repetitions for SPS multicast transmission(s). The DU 174 can transmit *(i.e.,* multicast) a number of repetitions of an SPS multicast transmission in accordance the aggregation factor, and the UE 102 receives the repetitions based on the aggregation factor. In cases where the DU 174 does not include the aggregation factor in the DU configuration, the UE 102 and DU 174 in some implementations can apply an aggregation factor for dynamic scheduling multicast transmission as described above. Alternatively, the UE 102 and DU 174 can apply an aggregation factor for unicast transmission(s). In some implementations, the UE 102 and DU 174 can apply an aggregation factor for unicast transmission(s) as described above.
- MCS configuration, which indicates a MCS table that the DU 174 uses to transmit an SPS multicast transmission and the UE 102 uses to receive the SPS multicast transmission. For example, the MCS table can be a MCS table defined in 3GPP specification 38.214 *(e.g.,* a low-SE 64QAM table indicated in Table 5.1.3.1-3 of 3GPP TS 38.214 or a new table specific for multicast transmission). In some implementations, if DU 174 does not include the MCS configuration in the DU configuration, the UE 102 and DU 174 can apply a MCS table predefined in 3GPP specification 38.214. For example, the predefined MCS table can be a 256QAM table or a 64QAM table, *e.g.,* indicated in Table 5.1.3.1-2 or non-low-SE 64QAM table indicated in Table 5.1.3.1-1 of the specification 38.214, respectively. In cases where the DU 174 does not include the MCS configuration in the DU configuration, the UE 102 and DU 174 in other implementations can apply a MCS table for dynamic scheduling multicast transmission to receive SPS multicast transmissions from the DU 174 as described above. Alternatively, the UE 102 and DU 174 can apply a MCS table for unicast transmission to receive SPS multicast transmissions from the DU 174. In some implementations the UE 102 and DU 174 can apply a MCS table for unicast transmission to receive SPS multicast transmissions from the DU 174 as described above. In some implementations, the DU 174 can include, in the DU configuration, a PDSCH configuration (e.g., PDSCH-Config) configuring the MCS table for unicast transmissions. In other implementations, the DU 174 can transmit to the UE 102 another DU configuration including the PDSCH configuration, similar to events 516, 518, and 520.

In some implementations, the CU-CP 172A can include the MBS session join response message in the RRC reconfiguration message. The UE 102 can include the MBS session join complete message in the RRC reconfiguration complete message. Alternatively, the UE 102 can send a UL RRC message including the MBS session join complete message to the CU-CP 172A via the DU 174. The UL RRC message can be an *ULInformationTransfer* message or any suitable RRC message that can include a UL NAS PDU. The CU-CP 172A can include the MBS session join complete message in the second BS-to-CN message. Alternatively, the CU-CP 172A can send to the CN 110 a BS-to-CN message *(e.g.,* an *UPLINK NAS TRANSPORT* message) including the MBS session join complete message.

In other implementations, the CU-CP 172A transmits a DL RRC message that includes the MBS session join response message to the UE 102. The DL RRC message can be a *DLInformationTransfer* message, another RRC reconfiguration message, or any suitable RRC message that can include a DL NAS PDU. The UE 102 can send a UL RRC message including the MBS session join complete message to the CU-CP 172A via the DU 174. The UL RRC message can be an *ULInformationTransfer* message, another RRC reconfiguration complete message or any suitable RRC message that can include a UL NAS PDU.

The events 532, 534, and 536 are collectively referred to in Fig. 5A as an MBS session data transmission procedure 596.

In cases where the CU-CP 172A does not receive slice information from the CN 110, the CU-CP 172A can include preconfigured slice information in the first CP-to-UP message of event 560. In cases where the CU-CP 172A does not receive slice information from the CN 110, the CU-CP 172A can include preconfigured slice information in the first CU-to-DU message of event 506.

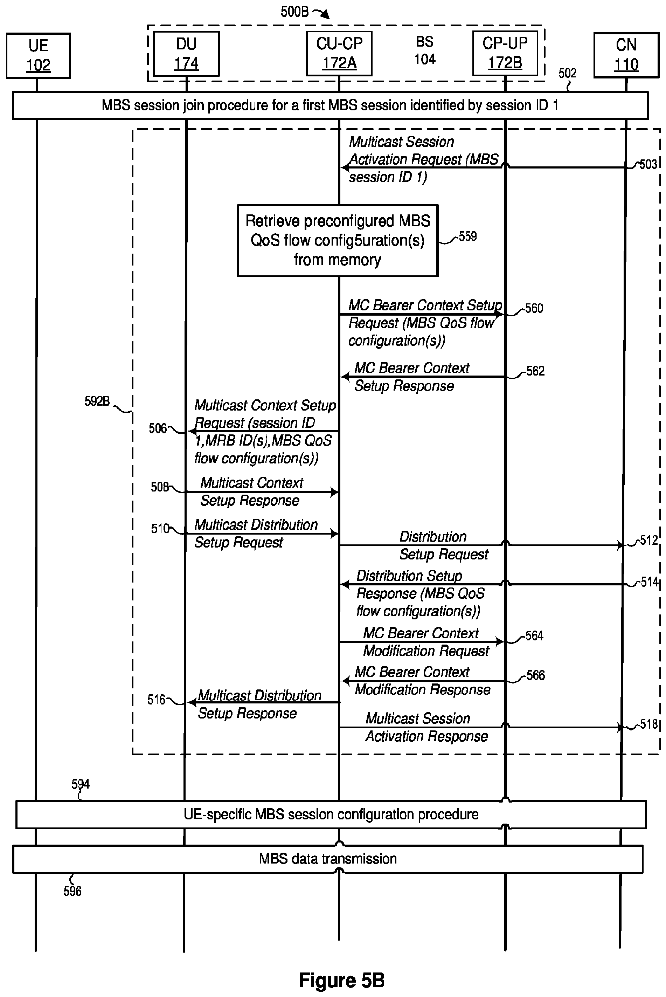

Fig. 5B illustrates an example scenario 500B similar to the scenarios 500A illustrated in Fig. 5A. In the scenario 500B, the CN 110 sends 503 a first CN-to-BS message (e.g., *Multicast Session Activation Request* message) including the first MBS session ID to the CU-CP 172A to request the CU-CP 172A to configure or activate resources for the first MBS session (i.e., a multicast (MBS) session). In this scenario, the CN 110 does not include MBS QoS flow configuration(s) for the first MBS session in the first CN-to-BS message. Thus, the CU-CP 172A generates the second MBS QoS flow configuration(s) based on preconfigured MBS QoS flow configuration(s). For example, the second MBS QoS flow configuration(s) are the same as the preconfigured MBS QoS flow configuration(s). In another example, the second MBS QoS flow configuration(s) are similar to the preconfigured MBS QoS flow configuration(s).

In some implementations, the CU-CP 172A can be preconfigured with the preconfigured MBS QoS flow configuration(s) before receiving the first CN-to-BS message. In other implementations, the CU-CP 172A can receive the preconfigured MBS QoS flow configuration(s) from an Operations, Administration and Maintenance (OAM) node before receiving the first CN-to-BS message. Examples or implementations described for the first MBS QoS flow configuration(s) can apply to the preconfigured MBS QoS flow configuration(s).

The events 503, 560, 562, 506, 508, 510, 512, 514, 564, 566, 516, and 518 are collectively referred to in Fig. 5B as an MBS session resource setup procedure 592B.

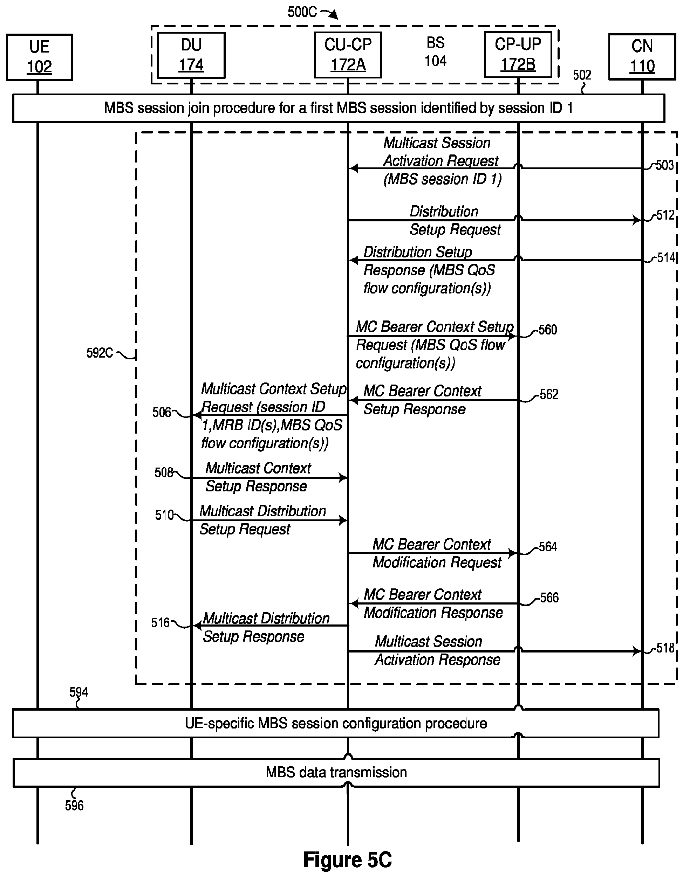

Fig. 5C illustrates an example scenario 500C similar to the scenarios 500A-B illustrated in Figs. 5A-B respectively. In the scenario 500C, the CN 110 includes the first MBS QoS flow configuration(s) in the second CN-to-BS message of event 514. In this case, the CN 110 may not include the first MBS QoS flow configuration(s) in the first CN-to-BS message. After receiving the second CN-to-BS message, the CU-CP 172A sends 560 the first CU-to-UP message and 506 the first CU-to-DU message to the CU-UP 172B and DU 174, respectively. In other words, the CU-CP 172A delay sending the first CP-to-UP message and first CU-to-DU message (e.g., delay performing the MC Bearer Context Setup procedure and the Multicast Context Setup procedure) until receiving the first MBS QoS flow configuration(s) or the second CN-to-BS message.

The events 503, 512, 514, 560, 562, 506, 508, 510, 564, 566, 516, and 518 are collectively referred to in Fig. 5C as an MBS session resource setup procedure 592C.

In some implementations, the CN 110 includes the first slice information in the second CN-to-BS message of event 514. In such cases, the CN 110 may not include the first slice information in the first CN-to-BS message. In some implementations, the CN 110 includes the first MBS area information in the second CN-to-BS message of event 514. In such cases, the CN 110 may not include the first MBS area information in the first CN-to-BS message.

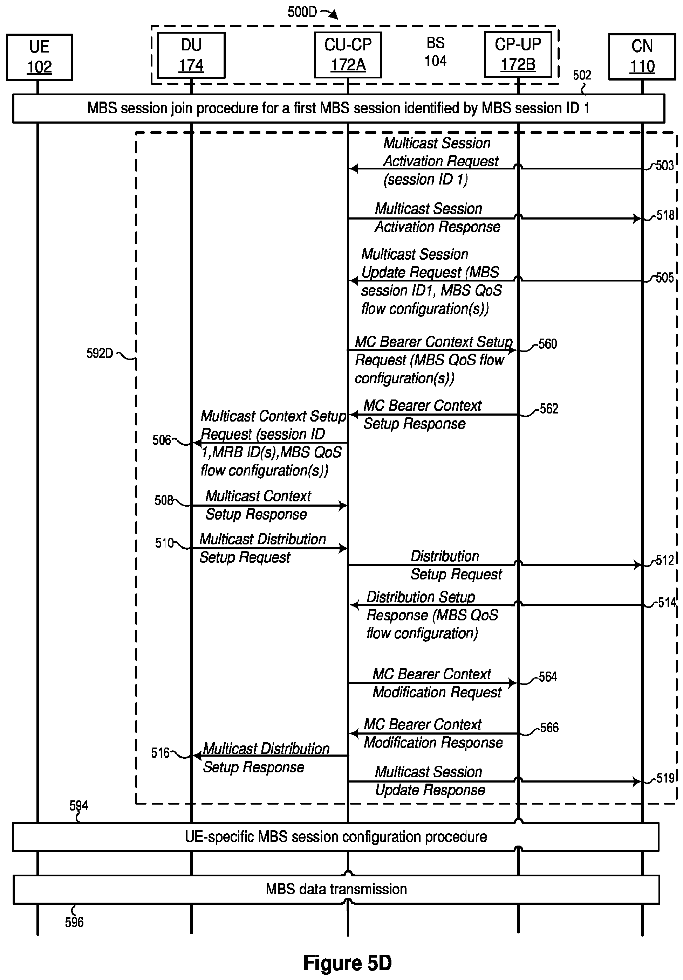

Fig. 5D illustrates an example scenario 500D similar to the scenarios 500A-C illustrated in Figs. 5A-C respectively. In the scenario 500D, the CN 110 sends 505 to the CU-CP 172A a fourth CN-to-BS message (e.g., a *Multicast Session Update Request* message) including the first MBS session ID and the first MBS QoS flow configuration(s) after sending 503 the first CN-to-BS message. After receiving the fourth CN-to-BS message, the CU-CP 172A sends 560 the first CU-to-UP message and 506 the first CU-to-DU message to the CU-UP 172B and DU 174, respectively. In other words, the CU-CP 172A delay sending the first CP-to-UP message and first CU-to-DU message (e.g., delay performing the MC Bearer Context Setup procedure and the Multicast Context Setup procedure) until receiving the first MBS QoS flow configuration(s) or the fourth CN-to-BS message. The CU-CP 172A can send 519 a fourth BS-to-CN message (e.g., a *Multicast Session Update Response* message) to the CN 110 in response to the fourth CN-to-BS message.

In some implementations, the CU-CP 172A sends 519 to the CN 110 the fourth BS-to-CN message upon receiving 503 the first CN-to-BS message. In other implementations, the CU-CP 172A sends 518 the second BS-to-CN message to the CN 110 before or after receiving 514 the second CN-to-BS message, receiving 566 the second UP-to-CP message or transmitting 516 the second CU-to-DU message. In some implementations, the CU-CP 172A sends 518 to the CN 110 the second BS-to-CN message before receiving 505 the fourth CN-to-BS message or sending 519 the fourth BS-to-CN message. In other implementations, the CU-CP 172A sends 518 the second BS-to-CN message to the CN 110 after receiving 505 the fourth CN-to-BS message or sending 519 the fourth BS-to-CN message.

In some implementations, the CN 110 includes the first slice information in the fourth CN-to-BS message of event 505. In such cases, the CN 110 may not include the first slice information in the first CN-to-BS message. In some implementations, the CN 110 includes the first MBS area information in the fourth CN-to-BS message of event 505. In such cases, the CN 110 may not include the first MBS area information in the first CN-to-BS message.

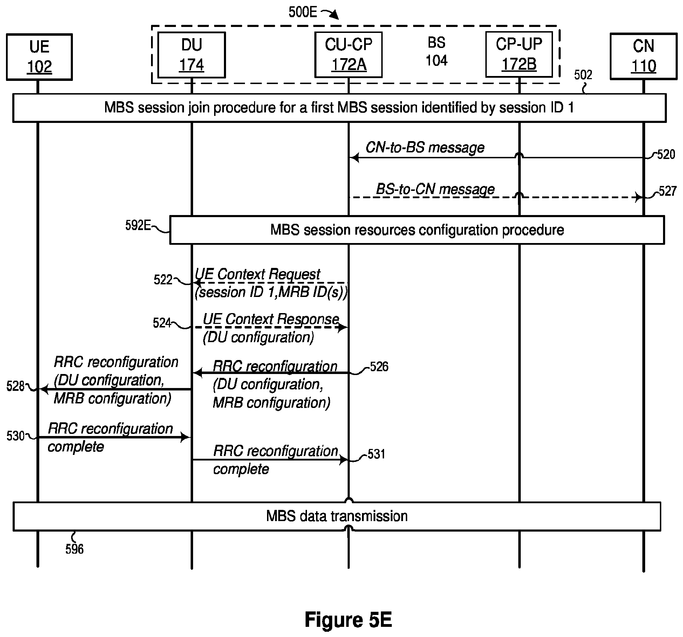

Fig. 5E illustrates an example scenario 500E similar to the scenarios 500A-B illustrated in Figs. 5A-B respectively. In the scenario 500E, the CN 110 include the first MBS QoS flow configuration(s) in the third CN-to-BS message of event 520 and the CN 110, CU-CP 172A, CU-CP 172B and DU 174 then performs 592E the MBS session resource configuration procedure, similar to the procedure 592B except that the CU-CP 172A generates the second MBS QoS flow configuration(s) based on the first MBS QoS flow configuration(s) as described for Fig. 5A.

In some implementations, the CN 110 includes the first slice information in the third CN-to-BS message of event 520. In such cases, the CN 110 may not include the first slice information in the first CN-to-BS message. In some implementations, the CN 110 includes the first MBS area information in the third CN-to-BS message of event 520. In such cases, the CN 110 may not include the first MBS area information in the first CN-to-BS message.

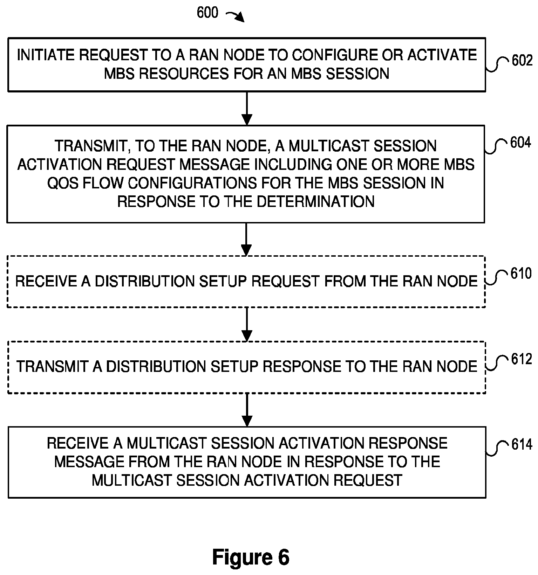

Next, several example methods that may be implemented by devices illustrated in Figs. 1A and/or 1B are discussed with reference to Figs. 6-9B.

First, Fig. 6 is a flow diagram of an example method 600 for multicast session establishment, which can be implemented in the CN 110 or another suitable CN. At block 602, the CN determines that it should request a RAN node, such the base station 104, to configure or activate MBS resources for an MBS session. Next, at block 604, the CN transmits a multicast activation request message to the base station (e.g., event 504). The message includes one or more MBS QoS flow configuration(s). The flow then proceeds to optional block 610, where the CN receives a distribution setup request from the base station (e.g., event 512). At optional block 612, the CN transmits a distribution setup response to the base station (e.g., event 514). Next, at block 614, the CN receives a multicast session activation response, responsive to the multicast session activation request transmitted to the base station at block 604 (e.g., event 518).

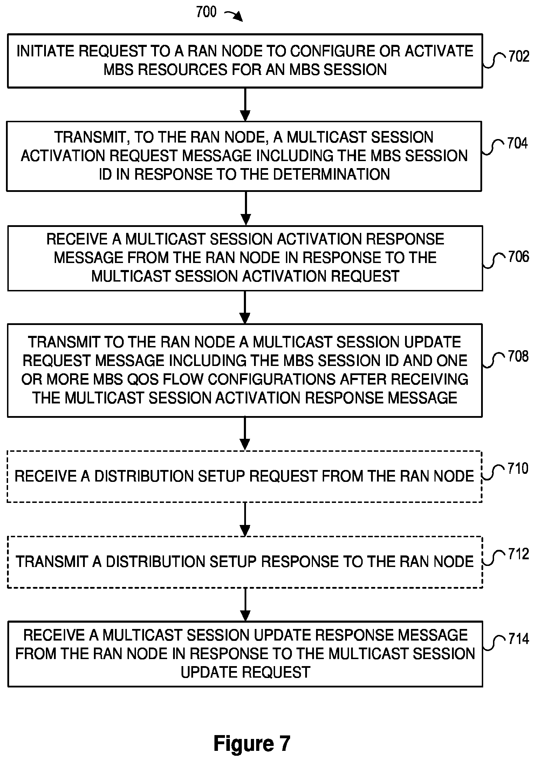

Fig. 7 is a flow diagram of an example method 700 for multicast session establishment similar to the method 600, but involving an update request rather than an activation request. At block 702, the CN initiates a request to configure or activate MBS resources for an MBS session at a RAN node, such as the base station 104. At block 704, the CN transmits, to the base station, a multicast session activation request in response to the initiation (e.g., event 504). The request can include an MBS session identity. At block 706, the CN receives, from the base station, a multicast session activate response (e.g., event 518), and, at block 708, the CN transmits a multicast session update request message to the base station (e.g., event 505). The multicast session update request message includes one or more MBS QoS flow configurations. Similar to the method 600 discussed above, the CN optionally performs block 710 and 712 similar to blocks 610 and 612, respectively. Finally, at block 714, the CN receives a multicast session update response, responsive to the multicast session update request transmitted to the base station at block 708 (e.g., event 519).

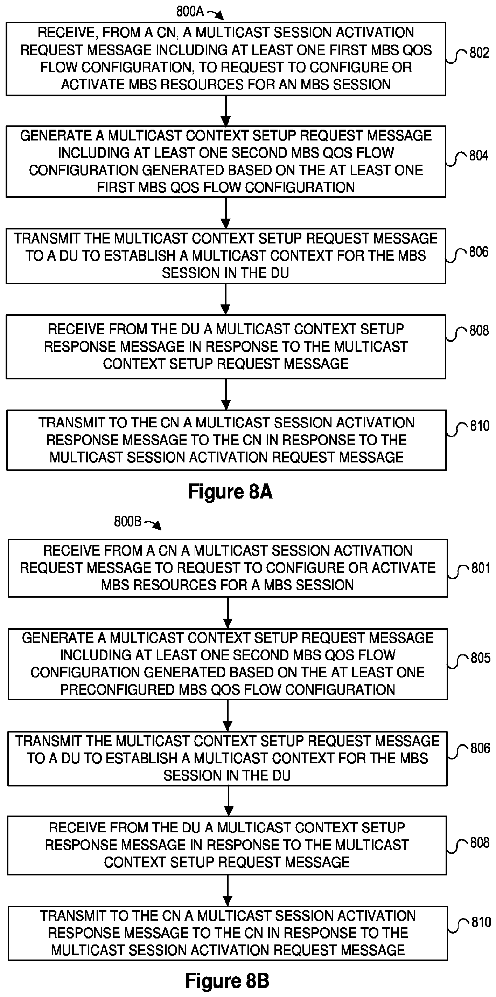

Fig. 8A is a flow diagram of an example method 800A for establishing a context for a multicast MBS session, with MBS QoS flow configurations arriving in a multicast session activation request message, which can be implemented in the CU 172 or another suitable RAN node. At block 802, the CU receives, from a CN, a multicast session activation request message including one or more MBS QoS flow configuration(s), to request configuration or activation of MBS resources for an MBS session (e.g., event 504). At block 804, the CU generates a multicast context setup request message including an MBS QoS flow configuration. The CU includes MBS QoS flow configuration(s) generated based on, or identical to, the MBS QoS flow configuration(s) received from the CN. At block 806, the CU transmits the multicast context setup request message to a DU, such as the DU 174, to establish a multicast context for the MBS session (e.g., event 506). Next, at block 808, the CU receives a multicast context setup response message responsive to the multicast context setup request message transmitted at block 806 (e.g., event 508). Finally, at block 810, the CU transmits, to the CN, a multicast session activation response message, responsive to the multicast session activation request message received at block 802 (e.g., event 518).

Fig. 8B is a flow diagram of an example method 800B similar to the method 800A, but with the CU retrieving QoS flow configuration(s) from a local memory. At block 801, the CU receives multicast session activation request message to request configuration or activation of MBS resources for an MBS session (e.g., 503). Unlike the multicast session activation request message of the method 800A, here this message does not include one or more MBS QoS flow configuration(s). Instead, at block 805, the CU retrieves one or more MBS QoS flow configuration(s) from a local memory, i.e., the CU uses preconfigured or pre-stored MBS QoS flow configurations. The CU then generates a multicast context setup request message including the one or more MBS QoS flow configuration(s). The CU then executes blocks 806, 808, and 810 discussed above.

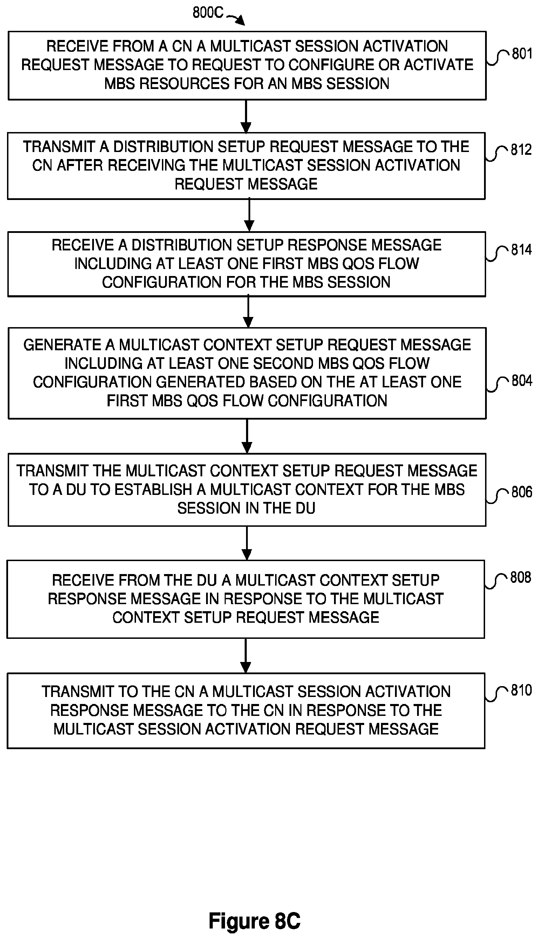

Fig. 8C is a flow diagram of an example method 800C similar to the method 800A, but with the CU receiving a distribution setup response with MBS QoS flow configurations, prior to setting up a multicast context with a DU. At block 801, the CU receives, from a CN, a multicast session activation request message, requesting that the CU configure or activate MBS resources for an MBS session (e.g., event 503). At block 812, and after receiving the multicast session activation request message, the CU transmits a distribution setup request message to the CN (e.g., event event 512), and receives a distribution setup response message at block 814 (e.g., event 514). The CU then executes blocks 804, 806, 808, and 810 discussed above.

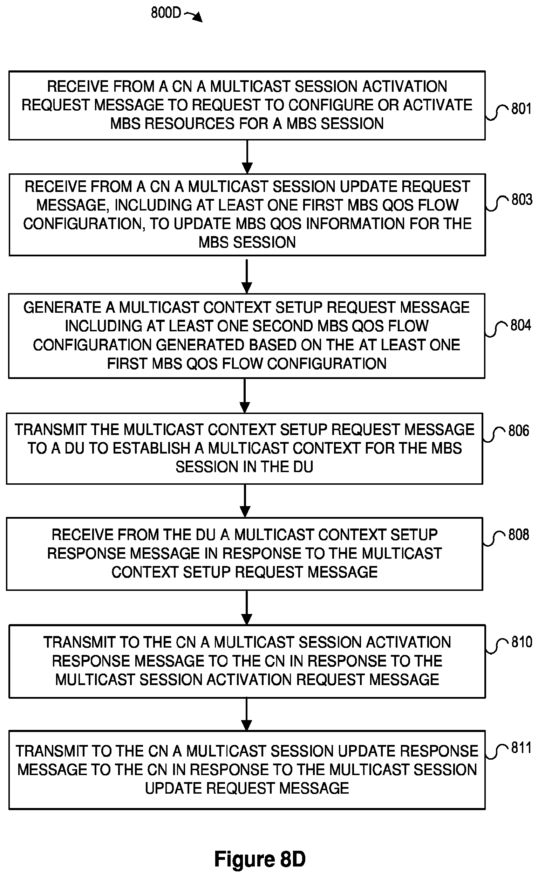

Referring to Fig. 8D, an example method 800D is generally similar to the method 800A, but here one or more MBS QoS flow configuration(s) arrive from a CN in a multicast session update request message. At block 801, the CU receives multicast session activation request message to request configuration or activation of MBS resources for an MBS session (e.g., event 503). At block 803, the CU receives, from the CN, a multicast session update request message for the MBS session (e.g., event 505). This message includes one or more MBS QoS flow configuration(s). The CU then executes blocks 804, 806, 808, and 810 discussed above. At block 811, the CU transmits, to the CN, a multicast session update response message, responsive to the message received at block 803.

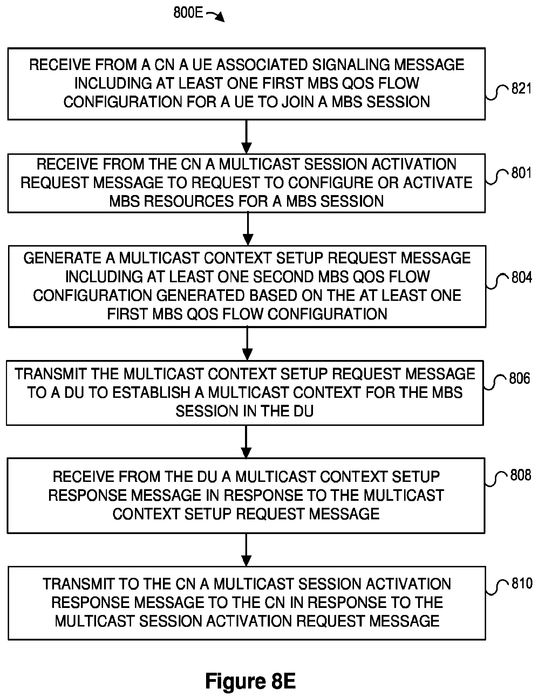

Fig. 8E is a flow diagram of an example method 800E similar to the method 800A, but with the CU receiving QoS flow configuration(s) in a message associated with a particular UE (e.g., event 520). At block 821, the CU receives, from a CN, a CN-to-CU message associated with a particular UE (rather than a group of UEs) and related to the UE joining an MBS session. The message includes one or more MBS QoS flow configurations. The CU then executes blocks 801, 804, 806, 808, and 810 discussed above.

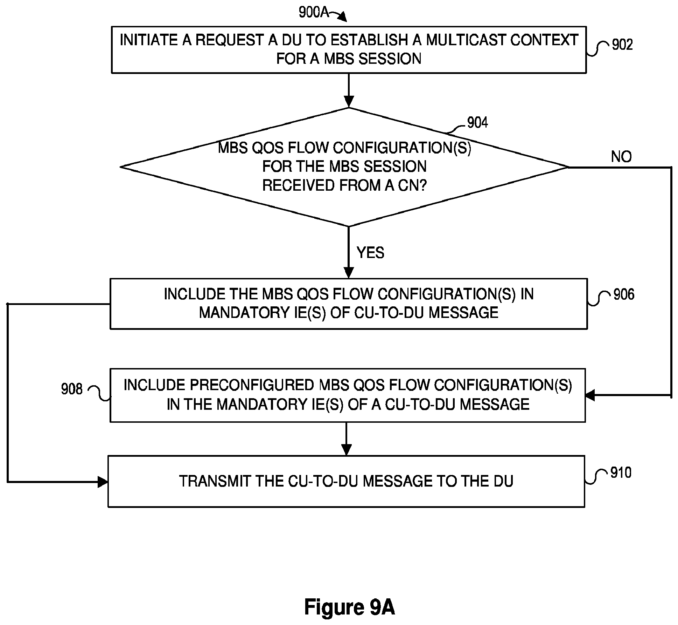

Fig. 9A is a flow diagram of an example method 900A for establishing a context for a multicast MBS session, in which a CU (e.g., the CU 172 or CU-CP 172A) determines whether to rely on a pre-stored MBS QoS flow configuration(s) based on whether the CN (e.g., the CN 110) has provided MBS QoS flow configuration(s) in a message to the CU. At block 902, the CU initiates a request to a DU to establish a multicast context for an MBS session. At block 904, the CU determines whether the CU received MBS QoS flow configuration(s) from a CN. If the CU received MBS QoS flow configuration(s) from the CN, the flow proceeds to block 906, where the CU includes the received one or more MBS QoS flow configuration(s) in a CU-to-DU message, using mandatory information elements (IEs) (e.g., event 506 of Figs. 5A, 5C, 5D and 5E). Otherwise, the flow proceeds from block 904 to block 908, where the CU includes preconfigured or pre-stored MBS QoS flow configuration(s) in the CU-to-DU message (e.g., event 506 of Fig. 5B). Then, at block 910, the CU transmits the CU-to-DU message to the DU.

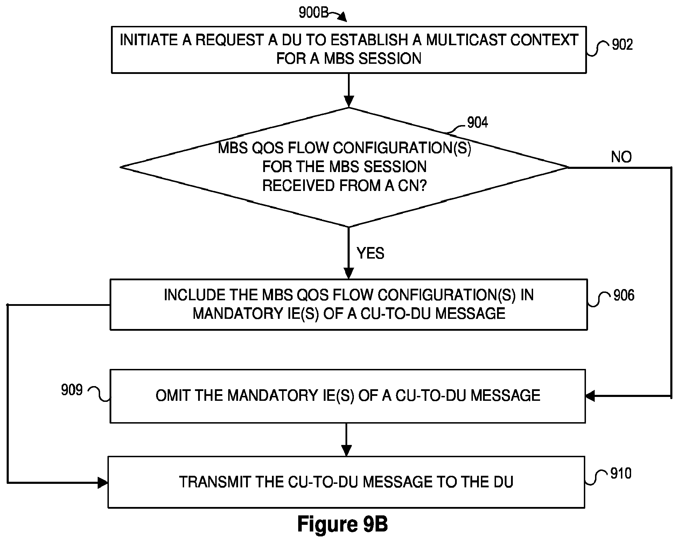

Finally, Fig. 9B illustrates an example method 900B, according to which a CU determines whether to exclude mandatory information elements (IEs) from a CU-to-DU message based on whether the CN has provided MBS QoS flow configuration(s) in a message to the CU. After executing blocks 902 and 904 discussed above, the CU similarly proceeds to block 906 to include the received one or more MBS QoS flow configuration(s) in a CU-to-DU message. However, if the CU determines at block 904 that no MBS QoS flow configuration(s) arrived from the CN, the flow proceeds to block 909, where the CU omits the IEs for conveying MBS QoS flow configuration(s) from the CU-to-DU message. In some implementations, these IEs are defined as mandatory elements of the CU-to-DU message. The flow then proceeds to block 910, where the CU transmits the CU-to-DU message to the DU.

Referring generally to the methods discussed above, these techniques similarly apply to network slice information. For example, messages such as 503, 504, or 560 can include network slice information instead of, or in addition to, one or more QoS MBS flow configuration(s).

The following additional considerations apply to the foregoing discussion.

Generally speaking, description for one of the above figures can apply to another of the above figures. An event or block described above can be optional or omitted. For example, an event or block with dashed lines in the figures can be optional or omitted. In some cases, an event or block with solid lines in the figures can still be optional or omitted if the event or block is not necessary. In some implementations, "message" is used and can be replaced by "information element (IE)". In some implementations, "IE" is used and can be replaced by "field". In some implementations, "configuration" can be replaced by "configurations" or the configuration parameters. In some implementations, "MBS" can be replaced by "multicast" or "broadcast". In some implementations, "SPS multicast" can be replaced by "multicast SPS". Similarly, "dynamic scheduling multicast" can be replaced by "multicast dynamic". In some implementations, "identifier" can be replaced by "identity". In some implementations, "CFR" is used and can be replaced by "MBS BWP". In some implementations, the term "transport layer configuration" can be replaced by "tunnel information" or "transport layer information".

A user device in which the techniques of this disclosure can be implemented (*e.g.,* the UE 102A, 102B, or UE 103) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (*e.g.,* code stored on non-transitory machine-readable medium) or hardware modules. A hardware module is a tangible unit capable of performing certain operations and may be configured or arranged in a certain manner. A hardware module can comprise dedicated circuitry or logic that is permanently configured (*e.g.,* as a special-purpose processor, such as a field programmable gate array (FPGA) or an application-specific integrated circuit (ASIC)) to perform certain operations. A hardware module may also comprise programmable logic or circuitry (*e.g.,* as encompassed within a general-purpose processor or other programmable processor) that is temporarily configured by software to perform certain operations. The decision to implement a hardware module in dedicated and permanently configured circuitry, or in temporarily configured circuitry (*e.g.,* configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

Upon reading this disclosure, those of skill in the art will appreciate still additional alternative structural and functional designs for performing a HARQ process to transmit MBS data through the disclosed principles herein. Thus, while particular embodiments and applications have been illustrated and described, it is to be understood that the disclosed embodiments are not limited to the precise construction and components disclosed herein. Various modifications, changes and variations, which will be apparent to those of ordinary skill in the art, may be made in the arrangement, operation and details of the method and apparatus disclosed herein without departing from the scope defined in the appended claims.

## Claims

1. A method for multicast session establishment, the method implemented in a central unit (172), CU, of a distributed base station and comprising:
transmitting (512), to a core network (110), CN, a distribution setup request message;
receiving (514), from the CN (110), a distribution setup response message including a first MBS QoS flow configuration; and
transmitting (506), to a distributed unit (174), DU, of the distributed base station, a multicast context setup request message including a second MBS QoS flow configuration based on the first MBS QoS flow configuration, to establish a multicast context for an MBS session.

2. The method of claim 1, further comprising:
receiving (508), from the DU (174) and in response to the multicast context setup request message, a multicast context setup response.

3. The method of claim 1 or 2, wherein the first MBS QoS flow configuration includes a flow level QoS parameter.

4. The method of claim 3, wherein the first MBS QoS flow configuration further includes an MBS QoS flow identifier.

5. The method of any of the preceding claims, further comprising:
receiving (504), prior to the transmitting of the distribution setup request message, a message from the CN (110) related to configuring resources for the MBS session,
wherein the transmitting of the distribution setup request message is responsive to the message from the CN (110).

6. The method of any of the preceding claims, wherein the MBS session corresponds to a Temporary Mobile Group Identity, TMGI.

7. The method of any of the preceding claims implemented in a CU control plane, CU-CP.

8. The method of any of the preceding claims, further comprising:
sending (564), to a CU user plane, CU-UP, and subsequently to the receiving of the distribution setup response message, an *MC Bearer Context Modification Request* message.

9. The method of claim 8, wherein the *MC Bearer Context Modification Request* message incudes an MBS QoS flow configuration based on the first MBS QoS flow configuration.

10. The method of any of the preceding claims, wherein the distribution setup response message includes an Internet Protocol, IP, source address.

11. The method of any of the preceding claims, wherein the distribution setup response message includes an IP multicast address.

12. The method of any of the preceding claims, wherein the distribution setup response message includes a Tunnel Endpoint Identifier, TEID,.

13. The method of any of the preceding claims, wherein the second MBS QoS flow configuration is identical to the first MBS QoS flow configuration.

14. The method of any of the preceding claims, wherein the second MBS QoS flow configuration is generated based on the first MBS QoS flow configuration.

15. A central unit (172), CU, of a distributed base station, the CU (172) comprising one or more processors and configured to implement a method according to any of the preceding claims.

## Patentansprüche

1. Verfahren zum Aufbau einer Multicast-Sitzung, wobei das Verfahren in einer zentralen Einheit (172), CU, einer verteilten Basisstation implementiert ist und Folgendes umfasst:
Übertragen (512) einer Verteilungseinrichtungsanforderungsnachricht an ein Kernnetz (110), CN;
Empfangen (514) von dem CN (110) einer Verteilungseinrichtungsantwortnachricht, die eine erste MBS-QoS-Flow-Konfiguration enthält; und
Übertragen (506) einer Multicast-Kontext-Setup-Anforderungsnachricht an eine verteilte Einheit (174), DU, der verteilten Basisstation, die eine zweite MBS-QoS-Flow-Konfiguration beinhaltet, die auf Basis der ersten MBS-QoS-Flow-Konfiguration generiert ist, um einen Multicast-Kontext für eine MBS-Sitzung einzurichten.

2. Verfahren nach Anspruch 1, ferner umfassend:
Empfangen (508) von der DU (174) und als Reaktion auf die Multicast-Kontext-Setup-Anforderungsnachricht einer Multicast-Kontext-Setup-Antwort.

3. Verfahren nach Anspruch 1 oder 2, wobei die erste MBS-QoS-Flow-Konfiguration einen Flow-Level-QoS-Parameter enthält.

4. Verfahren nach Anspruch 3, wobei die erste MBS-QoS-Flow-Konfiguration ferner einen MBS-QoS-Flow-Identifikator enthält.

5. Verfahren nach einem der vorhergehenden Ansprüche, ferner umfassend:
Empfangen (504) vor dem Übertragen der Verteilungseinrichtungsanforderungsnachricht einer Nachricht von dem CN (110) bezüglich der Konfiguration von Ressourcen für die MBS-Sitzung,
wobei das Übertragen der Verteilungseinrichtungsanforderungsnachricht auf die Nachricht von dem CN (110) reagiert.

6. Verfahren nach einem der vorhergehenden Ansprüche, wobei die MBS-Sitzung einer temporären mobilen Gruppenidentität, TMGI, entspricht.

7. Verfahren nach einem der vorhergehenden Ansprüche, implementiert in einer CU-Steuerungsebene, CU-CP.

8. Verfahren nach einem der vorhergehenden Ansprüche, ferner umfassend:
Senden (564) einer *MC Bearer Context Modification Request-*Nachricht an eine CU-Benutzerebene, CU-UP, und anschließend an das Empfangen der Verteilungseinrichtungsantwortnachricht.

9. Verfahren nach Anspruch 8, wobei die *MC Bearer Context Modification* Request-Nachricht eine MBS-QoS-Flow-Konfiguration enthält, die auf der ersten MBS-QoS-Flow-Konfiguration basiert.

10. Verfahren nach einem der vorhergehenden Ansprüche, wobei die Verteilungseinrichtungsantwortnachricht eine Internetprotokoll-Quelladresse, IP, enthält.

11. Verfahren nach einem der vorhergehenden Ansprüche, wobei die Verteilungseinrichtungsantwortnachricht eine IP-Multicast-Adresse enthält.

12. Verfahren nach einem der vorhergehenden Ansprüche, wobei die Verteilungseinrichtungsantwortnachricht einen Tunnel-Endpunkt-Identifikator, TEID, enthält.

13. Verfahren nach einem der vorhergehenden Ansprüche, wobei die zweite MBS-QoS-Flow-Konfiguration mit der ersten MBS-QoS-Flow-Konfiguration identisch ist.

14. Verfahren nach einem der vorhergehenden Ansprüche, wobei die zweite MBS-QoS-Flow-Konfiguration auf Basis der ersten MBS-QoS-Flow-Konfiguration generiert wird.

15. Zentrale Einheit (172), CU, einer verteilten Basisstation, wobei die CU (172) einen oder mehrere Prozessoren umfasst und konfiguriert ist, ein Verfahren nach einem der vorhergehenden Ansprüche zu implementieren.

## Revendications

1. Procédé d'établissement de session de multidiffusion, le procédé étant mis en œuvre dans une unité centrale (172), CU, d'une station de base distribuée et comprenant :
la transmission (512), à un réseau central (110), CN, d'un message de demande de configuration de distribution ;
la réception (514), en provenance du CN (110), d'un message de réponse de configuration de distribution comportant une première configuration de flux QoS MBS ; et
la transmission (506), à une unité distribuée (174), DU, de la station de base distribuée, d'un message de demande de configuration de contexte de multidiffusion comportant une seconde configuration de flux QoS MBS sur la base de la première configuration de flux QoS MBS, pour établir un contexte de multidiffusion pour une session MBS.

2. Procédé selon la revendication 1, comprenant également :
la réception (508), en provenance de la DU (174) et en réponse au message de demande de configuration de contexte de multidiffusion, d'une réponse de configuration de contexte de multidiffusion.

3. Procédé selon la revendication 1 ou 2, dans lequel la première configuration de flux QoS MBS comporte un paramètre QoS de niveau de flux.

4. Procédé selon la revendication 3, dans lequel la première configuration de flux QoS MBS comporte également un identifiant de flux QoS MBS.

5. Procédé selon l'une quelconque des revendications précédentes, comprenant également :
la réception (504), avant la transmission du message de demande de configuration de distribution, d'un message en provenance du CN (110) relatif à la configuration de ressources pour la session MBS,
dans lequel la transmission du message de demande de configuration de distribution est effectuée en réponse au message provenant du CN (110).

6. Procédé selon l'une quelconque des revendications précédentes, dans lequel la session MBS correspond à une identité de groupe mobile temporaire, TMGI.

7. Procédé selon l'une quelconque des revendications précédentes mis en œuvre dans un plan de commande CU, CU-CP.

8. Procédé selon l'une quelconque des revendications précédentes, comprenant également :
l'envoi (564), à un plan utilisateur CU, CU-UP, et après la réception du message de réponse de configuration de distribution, d'un message \*de demande de modification de contexte de support MC.*

9. Procédé selon la revendication 8, dans lequel le message *de demande de modification de contexte de support MC* comporte une configuration de flux QoS MBS sur la base de la première configuration de flux QoS MBS.

10. Procédé selon l'une quelconque des revendications précédentes, dans lequel le message de réponse de configuration de distribution comporte une adresse source de protocole Internet, IP.

11. Procédé selon l'une quelconque des revendications précédentes, dans lequel le message de réponse de configuration de distribution comporte une adresse de multidiffusion IP.

12. Procédé selon l'une quelconque des revendications précédentes, dans lequel le message de réponse de configuration de distribution comporte un identifiant de point d'extrémité de tunnel, TEID.

13. Procédé selon l'une quelconque des revendications précédentes, dans lequel la seconde configuration de flux QoS MBS est identique à la première configuration de flux QoS MBS.

14. Procédé selon l'une quelconque des revendications précédentes, dans lequel la seconde configuration de flux QoS MBS est générée sur la base de la première configuration de flux QoS MBS.

15. Unité centrale (172), CU, d'une station de base distribuée, la CU (172) comprenant un ou plusieurs processeurs et est configurée pour mettre en œuvre un procédé selon l'une quelconque des revendications précédentes.
